# EUROPEAN PATENT SPECIFICATION

(11) **EP 0 796 012 B1**
(45) Date of publication and mention of the grant of the patent: **29.12.2004**
(21) Application number: 97301537.3
(22) Date of filing: 07.03.1997
(51) Int. Cl.: H04N 5/91

(54) **Television signal recording and/or reproducing**
Fensehsignalaufzeichnung und/oder -wiedergabe
Enregistrement et/ou lecture de signal de télévision

(30) Priority: 12.03.1996 JP 8337596
(43) Date of publication of application: 17.09.1997
(73) Proprietor: SONY CORPORATION, Tokyo 141 (JP)
(72) Inventor: Kaihatsu, Chihiro, Intellectual Property Division, Shinagawa-ku, Tokyo 141 (JP); Kitazawa, Hosei, Intellectual Property Division, Shinagawa-ku, Tokyo 141 (JP); Kanota, Keiji, Intellectual Property Division, Shinagawa-ku, Tokyo 141 (JP)
(74) Representative: Pilch, Adam John Michael

(56) References cited:
- EP-A- 0 719 057

## Description

The invention relates to apparatus and methods for recording and/or reproducing television signals.

In television broadcasting, high picture quality and a wide screen are being realized in a frequency band of one channel, for example 6 MHz, while retaining compatibility with the existing broadcasting. For the existing broadcasting system, such television broadcasting is largely characterized by a laterally long wide screen such that its aspect ratio (ratio of vertical to horizontal lengths of the screen) is set to 9 : 16. In the European countries and the like using the PAL system at present, the PALplus system has been proposed as a television broadcasting system of the next generation.

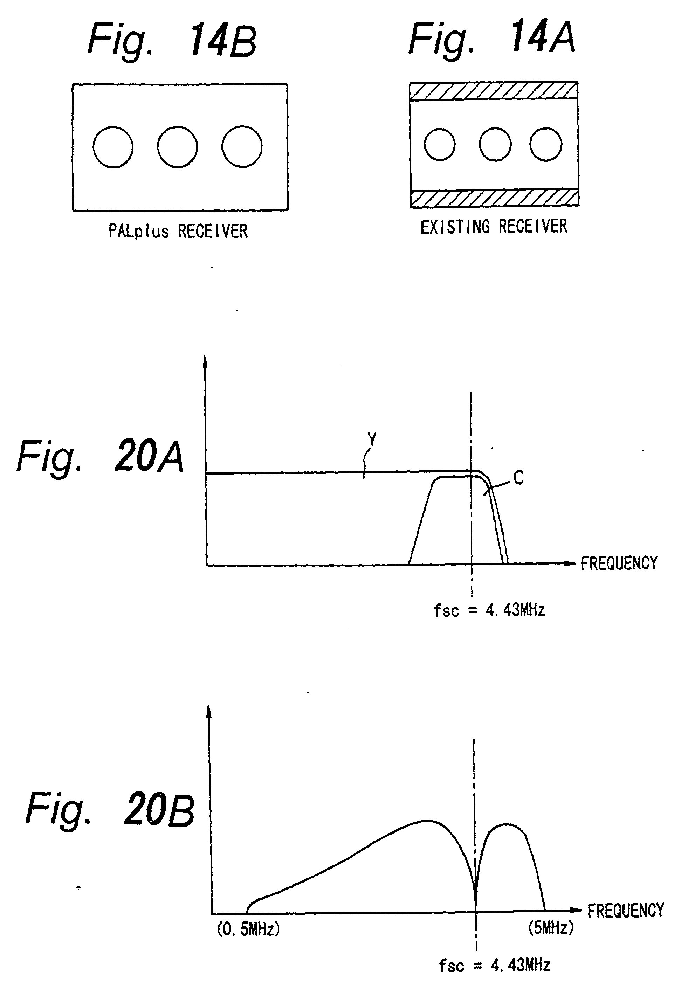

Figs. 14A and 14B of the accompanying drawings show examples of an image received by the PALplus system. Fig. 14A shows a state in which a video image which has been broadcast by the PALplus system is displayed on an existing television receiver screen having an aspect ratio of 3 : 4. In the existing television receiver in which a PALpus decoder is not provided and the aspect ratio is 3 : 4, as shown in Fig. 14A, a picture plane includes non-picture portions arranged in the upper and lower portions of a main picture portion. This is because a signal is transmitted in so-called letter box form in the PALplus system. When such a video image is displayed on a television receiver having a PALplus decoder, the video image is as shown in Fig. 14B and a wide screen picture can be obtained.

According to the PALplus system, helper signals to reinforce vertical resolution are multiplexed to the upper and lower non-picture portions. The helper signals and a letter box signal are shown in Fig. 15. Separately from the helper signals, signals indicating how the signals are recorded in the main picture portion or the upper and lower non-picture portions of a screen of the letter box are recorded on lines other than the lines of the helper signals and the signal of the letter box. This state is shown in Fig. 16. Among those signals, as shown in Fig. 17, a WSS (Wide Screen Signalling) signal indicative of the aspect ratio and the presence or absence of the helper signal is provided in the 23rd line. Further, when the helper signal is included, a helper reference signal, which will be explained hereinlater, for the helper signal is provided in the latter half of such a line.

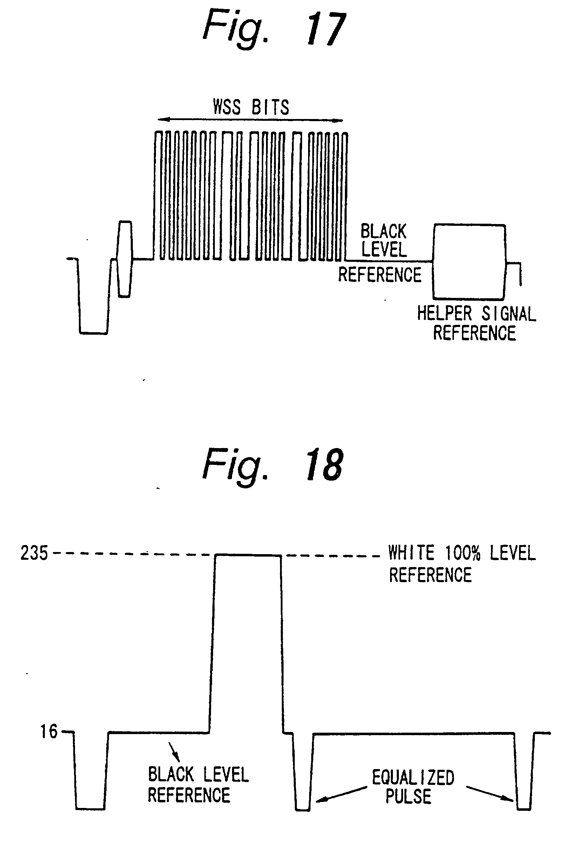

As shown in Fig. 18, a reference signal indicative of a level of white 100% is sent to the 623rd line. A radio wave transmitted from a broadcasting station is subjected to various interferences and is attenuated for a period of time during which it reaches the television receiver. A gain of the radio wave received by the television receiver is controlled by an AGC on the basis of the foregoing reference signal of white 100% so that a level in a range from a pedestal level to a sync chip level is set to a specified voltage. An amplitude of a reference burst signal of a subcarrier frequency mentioned above is also reconstructed by the reference signal of white 100%.

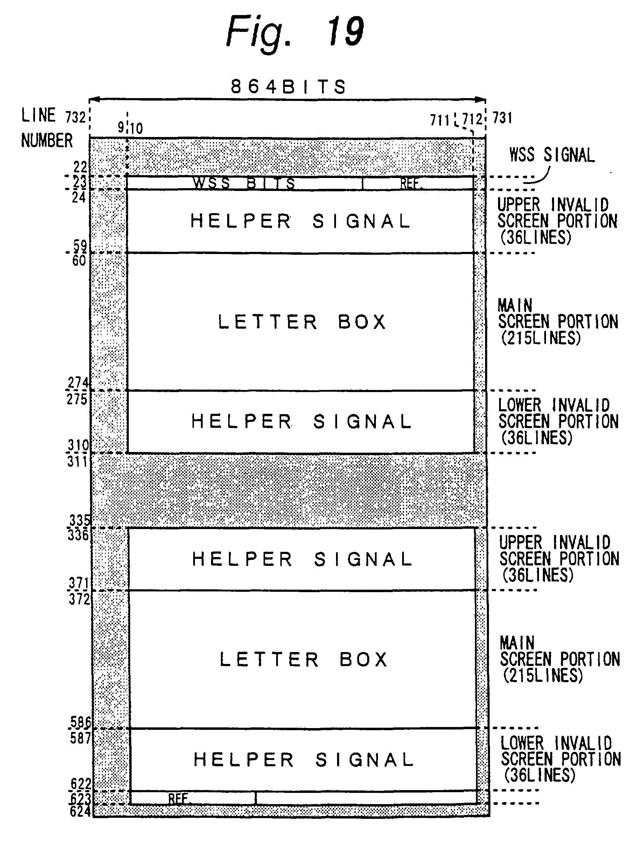

The details of the lines of the transmission signals and the pixel allocation of the PALplus signal are shown in Fig. 19. In the diagram, an axis of abscissa indicates a sample number when sampling by 13.5 MHz and an axis of ordinate indicates a line number. With respect to the axis of abscissa, a region of sample Nos. 10 to 711 is an effective area of the screen. WSS bits as a signal for identifying and controlling about whether the screen is a wide screen or not, whether the helper signal exists or not, and the like and a helper reference burst signal are allocated to the 23rd line. The helper reference burst signal is a chrominance subcarrier signal of a -U phase. Reference signals of a white level and a black level are allocated to the 623rd line. A region of the 24th to 59th lines and a region of the 336th to 371st lines correspond to upper non-picture portions. A region of the 275th to 310th lines and a region of the 587th to 622nd lines correspond to lower non-picture portions. A region of the 60th to 274th lines and a region of the 372nd to 586th lines in forms which are sandwiched by the upper and lower non-picture portions correspond to main picture portions.

When only the main picture portion is transmitted by the letter box form, now considering the screen size in which the height of screen coincides with that of the existing television receiver, both of a spatial resolution in the horizontal direction and a spatial resolution in the vertical direction deteriorate to about 3/4. To solve such a problem, according to the PALplus, a vertical resolution reinforcement signal (referred to as a helper signal) is transmitted. The helper signals are inserted into the foregoing upper non-picture portion and lower non-picture portion. In the PALplus system, any special countermeasure is not taken with respect to the horizontal resolution.

Fig. 20A shows signal spectra of a luminance signal Y and a carrier chrominance signal C according to the PALplus system. The C signal modulated by a chrominance subcarrier frequency 4.43 MHz has been frequency multiplexed to the Y signal. Fig. 20B shows a signal spectrum of the helper signal. This signal has also been modulated by the chrominance subcarrier frequency 4.43 MHz and has a band in a range about from 0.5 to 5 MHz.

In the main picture portion, after pixels of the sequential scan of 625 lines (576 valid scanning lines) were converted into the signals of 430 valid scanning lines by a scanning line conversion of 4-3, a predetermined vertical low pass filtering process is executed, and they are converted into pixels of the interlace scan. In this instance, since the 4-3 conversion has been performed, a vertical resolution has been deteriorated. Therefore, the foregoing helper signal is transmitted to reinforce the deteriorated vertical resolution.

A DVCR (digital video cassette recorder) in which the video signal and audio signals are recorded and reproduced to/from a cassette tape in a digital signal form has also been proposed. A magnetic tape which is used in this system has a width of 1/4 inch and is enclosed in a cassette. As such a cassette, cassettes of two kinds of sizes are prepared. A standard cassette has dimensions of 125 mm (lateral), x 78 mm (vertical) x 14.6 mm (height). A small cassette has dimensions of 66 mm (lateral) x 48 mm (vertical) x 12.2 mm (height). In case of recording the existing television signal, a recording time is set to up to 4 hours and 30 minutes for the standard cassette and to up to 1 hour for the small cassette.

A video input/output signal for the DVCR is a (4 : 2 : 2) component signal of the CCIR (Consultative Committee on Internation, present ITU-RS) recommendation 601. This signal is inputted to the digital VCR and is converted into a predetermined component signal by a sampling frequency converting circuit. For example, in case of the NTSC system used in Japan, U.S.A., or the like in which the input signal is set to 525 lines/60 Hz, such a signal is a (4 : 1 : 1) component signal. In case of the PAL system which is used in Europe, China, and the like in which the input signal is set to 625 lines/50 Hz, such a signal is a (4 : 2 : 0) component signal in which color difference signals C_{R} and C_{B} are line sequenced. The converted component signal is compressed, is added with an error correction code, is recording encoded, and is recorded onto the foregoing magnetic tape.

A recording/reproduction of a television signal according to the foregoing PALplus system will now be considered. If the user has a television monitor and a DVCR corresponding to the PALplus system, for example, in the case where a cassette in which a signal according to the PALplus system (hereinafter, referred to as a PALplus signal) has been digitally recorded is reproduced by the DVCR corresponding to the PALplus system and is likewise reproduced by the television monitor corresponding to the PALplus system, no problem will occur and the wide screen of a high quality of the PALplus system can be enjoyed.

However, actually, there occur various situations such as case where although the user has the DVCR corresponding to the PALplus system, he doesn't have the television monitor corresponding to the PALplus system, case where although the user has the DVCR and television monitor corresponding to the PALplus system, the cassette recorded by such a DVCR is reproduced by another DVCR or television monitor which doesn't correspond to the PALplus system, and the like.

In such a case, for instance, there is a problem such that when the PALplus signal is recorded by the DVCR corresponding to the PALplus system and is reproduced by the television monitor which doesn't correspond to the PALplus system and in which the aspect ratio of the screen is set to 3 : 4, an influence by the helper signal as a vertical resolution reinforcement signal inserted in the PALplus signal appears in the upper and lower non-picture portions. Since the helper signal has been modulated by the chrominance subcarrier frequency 4.43 MHz as mentioned above, such an influence by the helper signal appears, for example, as a blue image obstacle in the non-picture portion.

An obstacle also occurs even by the WSS signal. Since the WSS signal as binary data includes a large amount of high band component, if the signal is recorded by the same method as that of the ordinary video signal, a distortion occurs in the signal. In the case where the signal recorded as mentioned above is reproduced by the television receiver or the like corresponding to the PALplus system, when the WSS signal including such a distortion is demodulated, the signals for identification and control in the PALplus system included in the WSS signal is not correctly reconstructed and there is a possibility such that an erroneous operation occurs in the receiver.

The image obstacle by the helper signal can be avoided by a method whereby the vertical resolution reinforcement by the helper signal is not consciously executed upon recording/reproduction of the PALplus signal. However, hitherto, a recording/reproducing apparatus of a television signal such that the execution of the vertical resolution reinforcement by the helper signal can be consciously prevented by the user doesn't exist.

Similarly, the obstacle by the WSS signal can also be avoided by a method whereby the vertical resolution reinforcement by the helper signal is not executed upon reproduction and the WSS signal is invalidated. In this case as well, hitherto, a recording/reproducing apparatus for a television signal in which the WSS signal is consciously invalidated is not available.

According to an aspect of the invention, there is provided a recording apparatus of a television signal, characterized by comprising: detecting means for detecting whether an input signal is either one of the first and second television signals by using the identification signal and generating a detection signal; display means for displaying that the input signal is the first television signal in response to the detection signal; instructing means for selectively instructing whether the resolution reinforcement signal is recorded or not and generating a selection signal; signal processing means which is controlled on the basis of the detection signal and the selection signal and forms a digital recording signal; and means for recording the detection signal and the selection signal together with the digital recording signal from the signal processing means onto the recording medium.

According to another aspect of the invention, there is provided a recording method of a television signal, characterized by comprising: a step of detecting whether an input signal is either one of the first and second television signals by using the identification signal and generating a detection signal; a step of displaying that the input signal is the first television signal in response to the detection signal; a step of selectively instructing whether the resolution reinforcement signal is recorded or not and generating a selection signal; a step which is controlled on the basis of the detection signal and the selection signal and forms a digital recording signal; and a step of recording the detection signal and the selection signal together with the digital recording signal onto the recording medium.

According to a further aspect of the invention, there is provided a reproducing apparatus of a television signal, characterized by comprising: means for reproducing the recording medium and generating the digital reproduction signal; detecting means for detecting whether the digital reproduction signal is a first reproduction signal of a form including a resolution reinforcement signal or a second reproduction signal of a form which doesn't include the resolution reinforcement signal from a control signal included in the digital reproduction signal and generating a detection signal; display means for displaying that the digital reproduction signal is the first reproduction signal in response to the detection signal; instructing means for selectively instructing whether the resolution reinforcement signal is added to an output signal or not and generating a selection signal; and signal processing means which is controlled on the basis of the detection signal and the selection signal and outputs, as a reproduction signal, one of a first television signal of a form including the resolution reinforcement signal and an identification signal which were inserted in a vertical blanking period and a second television signal of a form which doesn't include the resolution reinforcement signal and the identification signal.

According to a still further aspect of the invention, there is provided a reproducing method of a television signal, characterized by comprising: a step of reproducing the recording medium and generating the digital reproduction signal; a step of detecting whether the digital reproduction signal is a first reproduction signal of a form including a resolution reinforcement signal or a second reproduction signal of a form which doesn't include the resolution reinforcement signal from a control signal included in the digital reproduction signal and generating a detection signal; a step of displaying that the digital reproduction signal is the first reproduction signal in response to the detection signal; a step of selectively instructing whether the resolution reinforcement signal is added to an output signal or not and generating a selection signal; and a step which is controlled on the basis of the detection signal and the selection signal and outputs, as a reproduction signal, one of a first television signal of a form including the resolution reinforcement signal and an identification signal which were inserted in a vertical blanking period and a second television signal of a form which doesn't include the resolution reinforcement signal and the identification signal.

According to a yet further aspect of the invention, there is provided a recording and reproducing apparatus of a television signal, characterized by comprising: detecting means for detecting whether an input signal is either one of the first and second television signals by using the identification signal and generating a detection signal; display means for displaying that the input signal is the first television signal in response to the detection signal; instructing means for selectively instructing whether the resolution reinforcement signal is recorded or not and generating a selection signal; signal processing means which is controlled on the basis of the detection signal and the selection signal and forms a digital recording signal; means for recording the detection signal and the selection signal together with the digital recording signal from the signal processing means onto the recording medium; means for reproducing the recording medium and generating a digital reproduction signal; detecting means for detecting whether the digital reproduction signal is a first reproduction signal of a form including the resolution reinforcement signal or a second reproduction signal of a form which doesn't include the resolution reinforcement signal from a control signal included in the digital reproduction signal and generating a detection signal; display means for displaying that the digital reproduction signal is the first reproduction signal in response to the detection signal; instructing means for selectively instructing whether the resolution reinforcement signal is added to an output signal or not and generating a selection signal; and signal processing means which is controlled on the basis the detection signal and the selection signal and outputs, as a reproduction signal, one of the first television signal of a form including the resolution reinforcement signal and the identification signal which were inserted in a vertical blanking period and the second television signal of a form which doesn't include the resolution reinforcement signal and the identification signal.

According to yet another aspect of the invention, there is provided a recording and reproducing method of a television signal, characterized by comprising: a step of detecting whether an input signal is either one of the first and second television signals by using the identification signal and generating a detection signal; a step of displaying that the input signal is the first television signal in response to the detection signal; a step of selectively instructing whether the resolution reinforcement signal is recorded or not and generating a selection signal; a step which is controlled on the basis of the detection signal and the selection signal and forms a digital recording signal; a step of recording the detection signal and the selection signal together with the digital recording signal onto the recording medium; a step of reproducing the recording medium and generating a digital reproduction signal; a step of detecting whether the digital reproduction signal is a first reproduction signal of a form including the resolution reinforcement signal or a second reproduction signal of a form which doesn't include the resolution reinforcement signal from a control signal included in the digital reproduction signal and generating a detection signal; a step of displaying that the digital reproduction signal is the first reproduction signal in response to the detection signal; a step of selectively instructing whether the resolution reinforcement signal is added to an output signal or not and generating a selection signal; and a step which is controlled on the basis the detection signal and the selection signal and outputs, as a reproduction signal, one of the first television signal of a form including the resolution reinforcement signal and the identification signal which were inserted in a vertical blanking period and the second television signal of a form which doesn't include the resolution reinforcement signal and the identification signal.

According to a preferred embodiment of the invention, the display means is provided for detecting whether the input signal is either one of the first and second television signals by using the identification signal and displaying that the input signal is the first television signal in response to the detection result. Therefore, the user can easily know that the process that is being executed in the apparatus is for the required one of the first and second television signals.

Since the instructing means is operable to instruct selectively whether the resolution reinforcement signal is validated or not and to generate the selection signal, the execution of the resolution reinforcement can be prevented upon recording and reproduction.

The preferred embodiment of the invention therefore provides recording/reproducing apparatus and a recording/reproducing method for a television signal such that the user can easily know whether the signal process that is being executed in the apparatus is for a PALplus signal or a PAL signal, and also such that whether a vertical resolution reinforcement by a helper signal is executed or not can be consciously selected by the user.

The invention will now be described by way of example with reference to the accompanying drawings, throughout which like parts are referred to by like references, and in which:

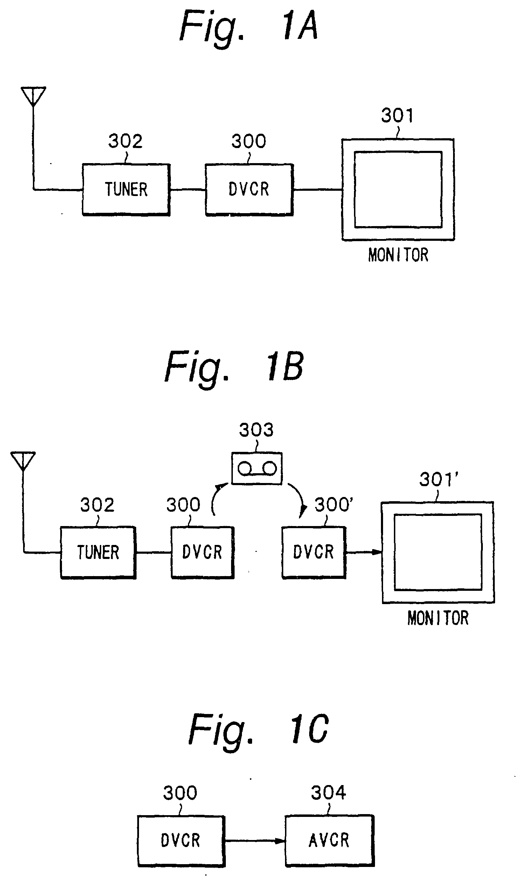

Figs. 1A to 1C are schematic diagrams showing an example of a DVCR to which the invention may be applied;

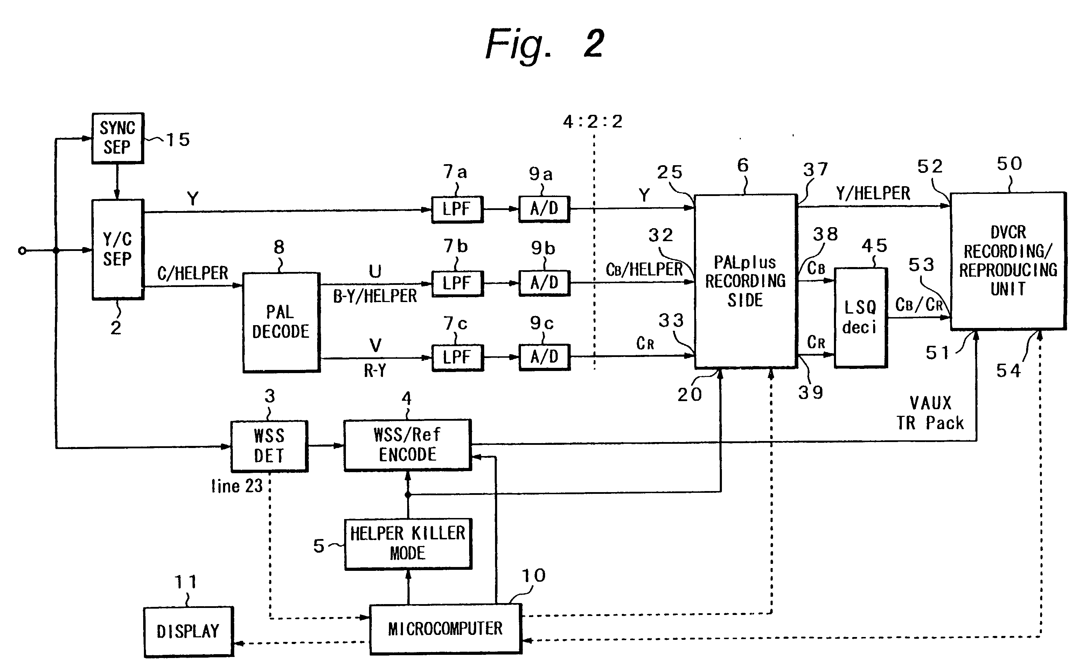

Fig. 2 is a block diagram showing an example of a construction on the recording side of the DVCR;

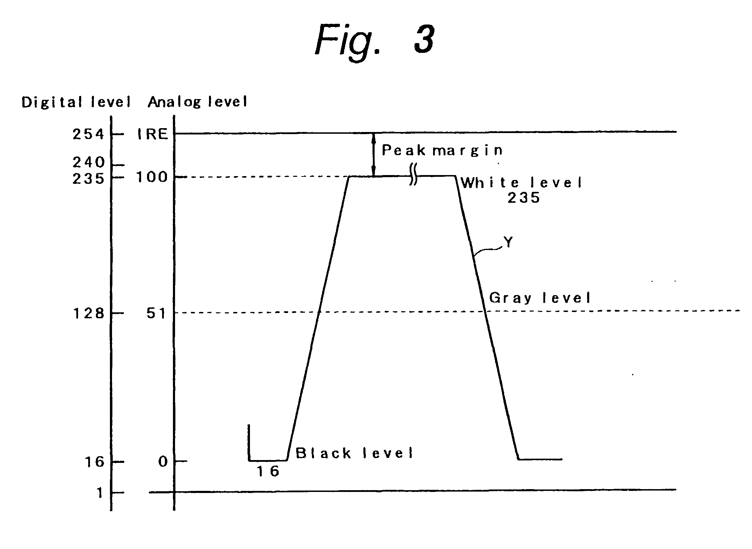

Fig. 3 is a schematic diagram showing an example of normalization of a signal;

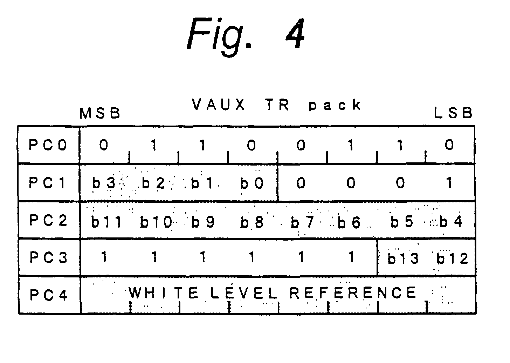

Fig. 4 is a diagram for explaining a TR pack;

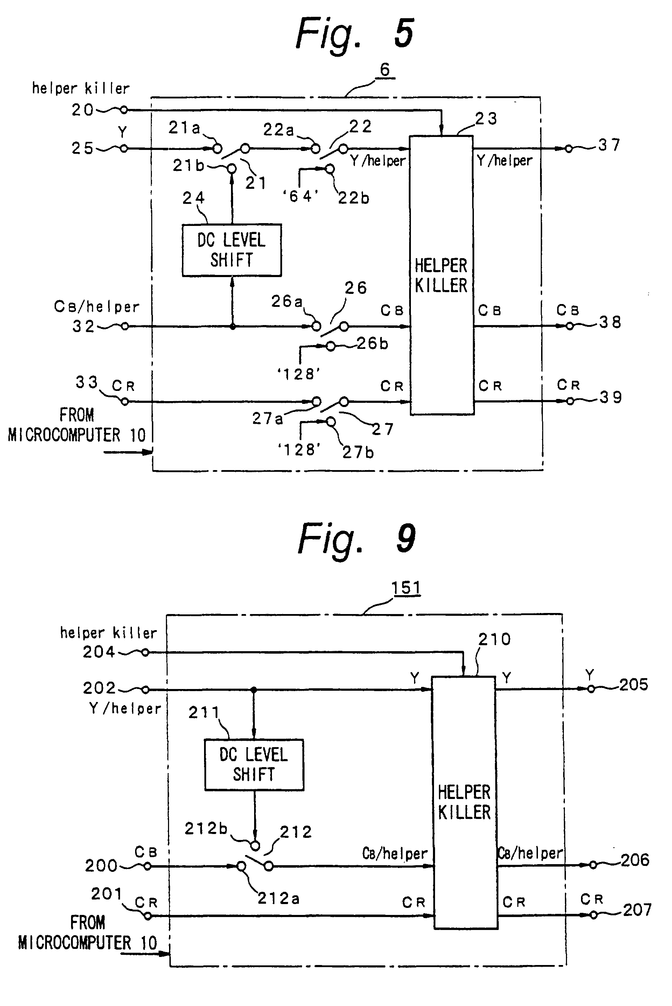

Fig. 5 is a block diagram showing an example of a construction of a PALplus recording side processing circuit;

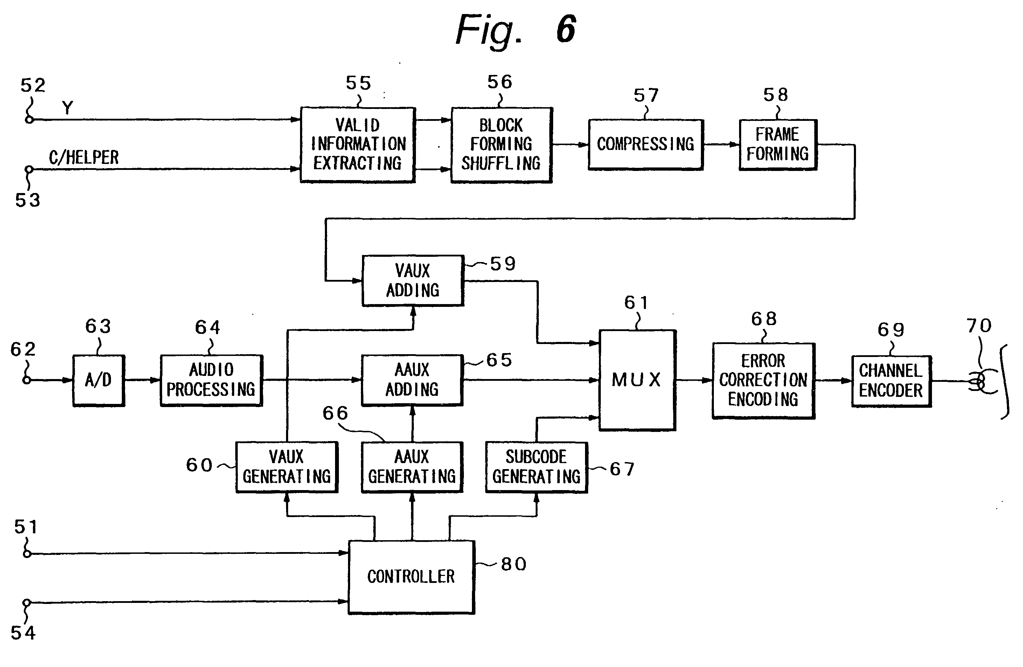

Fig. 6 is a block diagram showing an example of a construction on the recording side of a DVCR recording and reproducing unit;

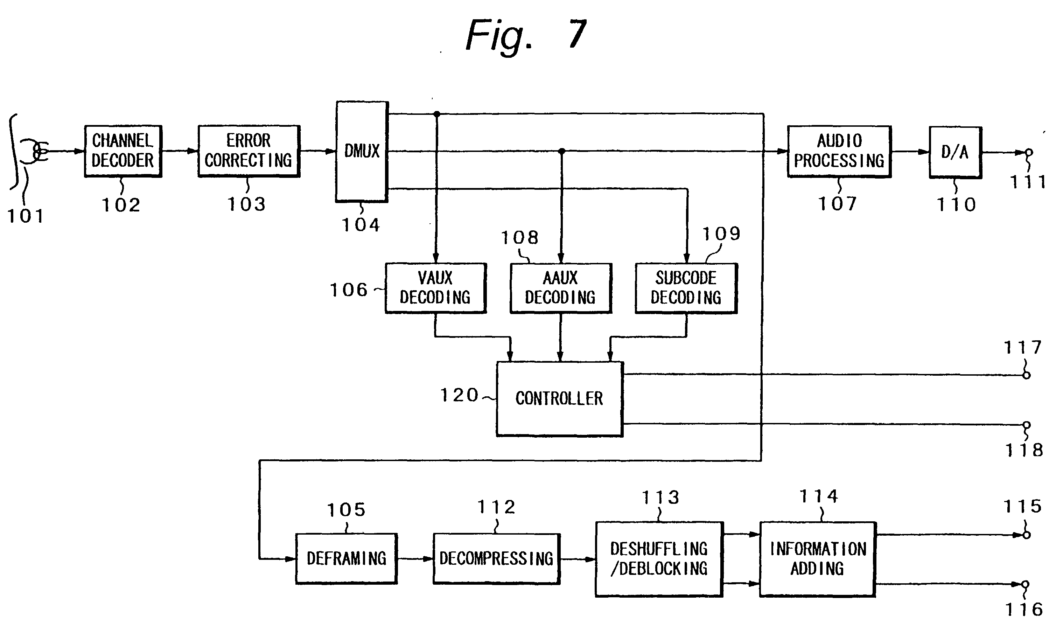

Fig. 7 is a block diagram showing an example of a construction on the reproducing side of a DVCR recording and reproducing unit;

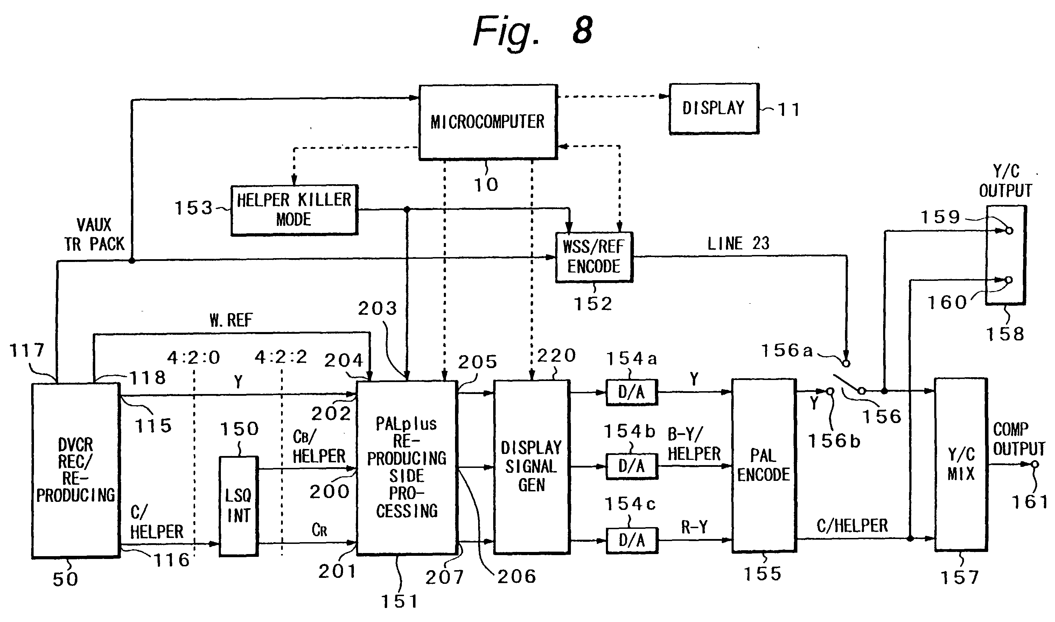

Fig. 8 is a block diagram showing an example of a construction on the reproducing side of the DVCR;

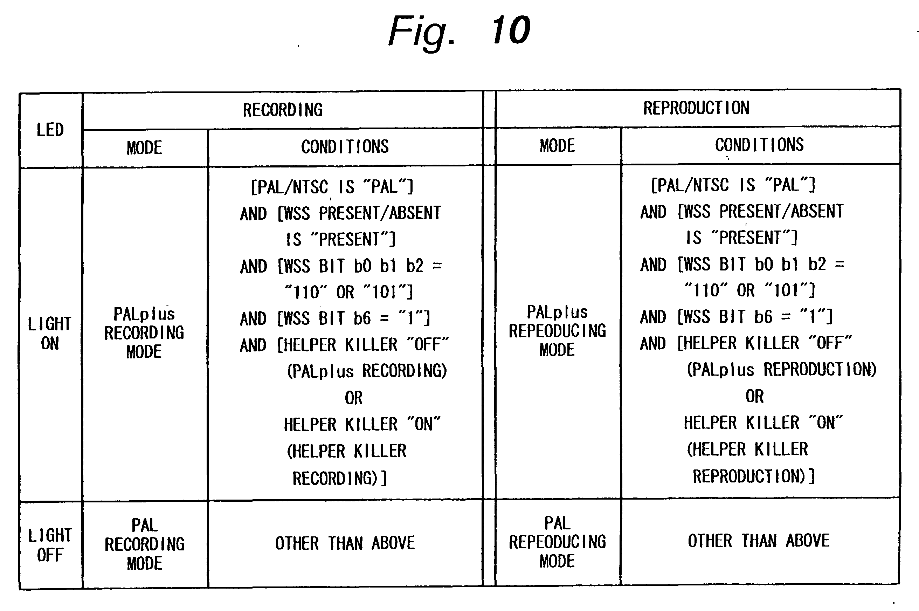

Fig. 9 is a block diagram showing an example of a construction of a PALplus reproducing side processing circuit;

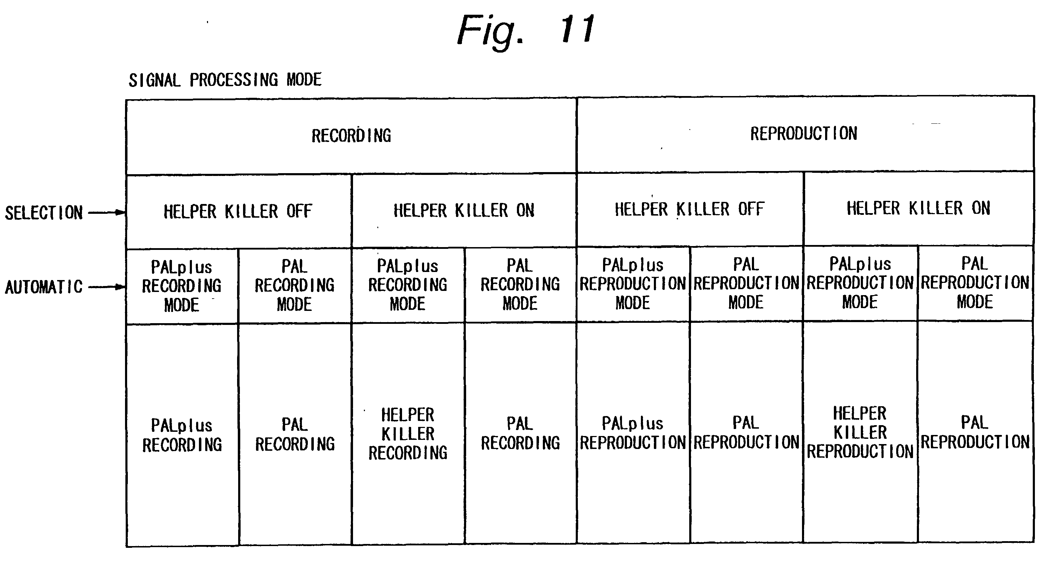

Fig. 10 is a schematic diagram showing an example of conditions upon mode discrimination;
Fig. 11 is a schematic diagram showing a classification of signal processing modes;

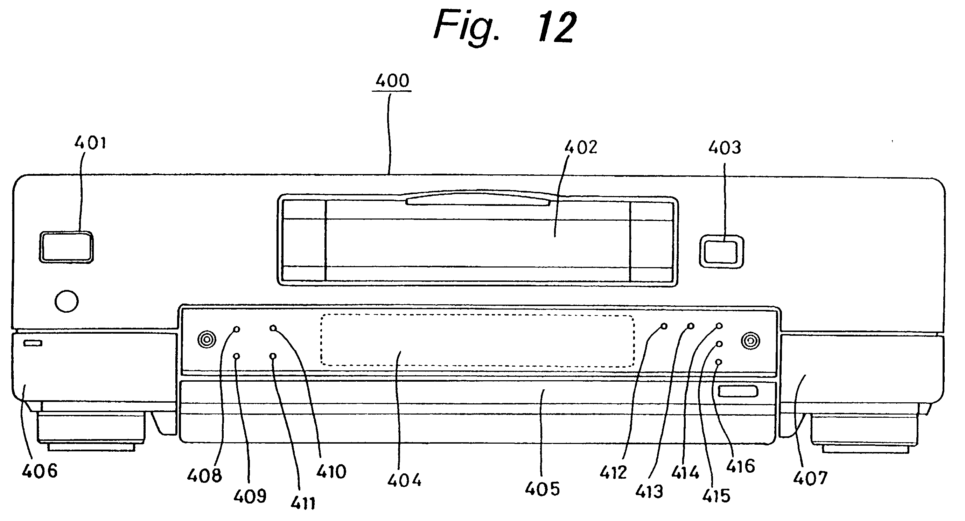

Fig. 12 is a schematic diagram practically showing a front panel of an example of the DVCR to which the invention is applied;

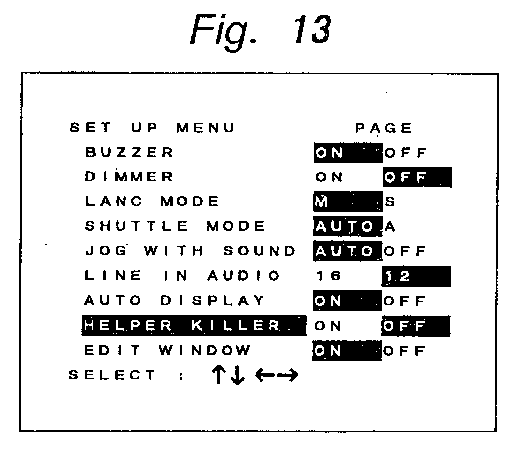

Fig. 13 is a schematic diagram showing an example of a construction of a menu screen to select ON/OFF of a helper killer function;
Figs. 14A and 14B are schematic diagrams showing an example of an image received by the PALplus system;

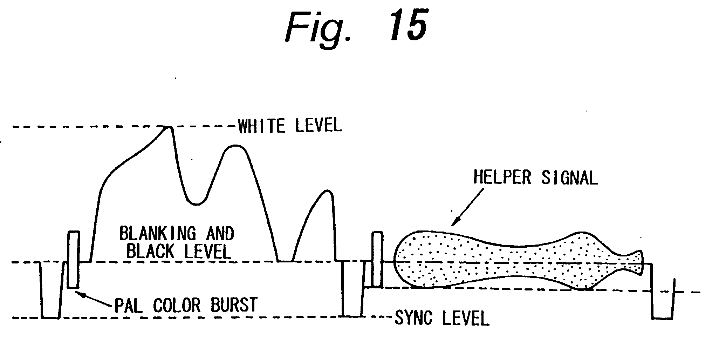

Fig. 15 is a schematic diagram showing a PALplus signal;

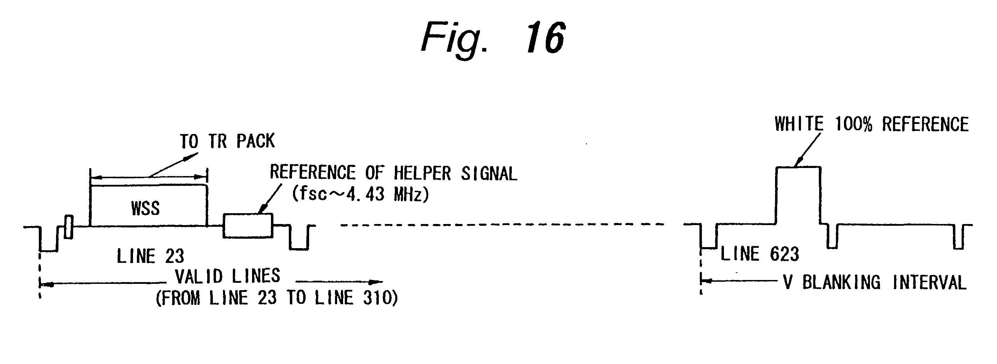

Fig. 16 is a schematic diagram showing the PALplus signal;
Fig. 17 is a schematic diagram showing a WSS signal;
Fig. 18 is a schematic diagram showing a reference signal of white 100%;
Fig. 19 is a schematic diagram showing lines of a transmission signal in the PALplus signal and a pixel allocation; and
Figs. 20A and 20B are schematic diagrams showing signal spectra of the PALplus signal.

An embodiment of the invention will be described hereinbelow. A DVCR (Digital Video Cassette Recorder) embodying the invention automatically discriminates whether a television signal to be recorded/reproduced is a television signal according to the PALplus system (hereinlater, abbreviated to a PALplus signal) or not and clearly notifies the user of a discrimination result when the television signal is recorded/reproduced. When the television signal is the PALplus signal, whether the signal is recorded/reproduced as a PALplus signal or not can be consciously selected by the user.

Figs. 1A to 1C show examples of use of a DVCR (Digital Video Cassette Recorder) to which the invention may be applied. In the example shown in Fig. 1A, a television signal received by an antenna is recorded to a cassette tape by a DVCR 300 via a tuner 302. The recorded television signal is reproduced by the DVCR 300 and is supplied to and displayed on a television monitor 301. Fig. 1B shows an example in which a television signal recorded by the DVCR 300 is reproduced and displayed by another DVCR 300' and another television monitor 301' via a cassette tape 303. Fig. 1C shows an example in which a cassette tape on which the television signal has been recorded is reproduced by the DVCR 300 and is recorded by another VCR, for example, an analog VCR 304.

Fig. 2 shows an example of a construction on the recording side of the DVCR 300. For example, a television broadcasting radio wave received by an antenna is converted to a television signal via a tuner and is supplied to an input terminal 1. It is now assumed that the television broadcasting radio wave is based on the PALplus system and, therefore, the television signal supplied to the input terminal 1 is the television signal according to the PALplus system (hereinlater, abbreviated to a PALplus signal).

The supplied PALplus signal is sent to both of a Y/C separating circuit 2 and a WSS detecting circuit 3. The PALplus signal supplied from the input terminal 1 is also sent to a sync separating circuit 15, by which vertical and horizontal sync signals are separated and extracted. The separated and extracted sync signals are supplied to the Y/C separating circuit 2 as pulses indicating that the signal supplied from the input terminal 1 corresponds to a non-picture portion or a main picture portion and are also supplied to a line counter (not shown) for controlling the whole apparatus and the number of lines is counted.

The Y/C separating circuit 2 separates a luminance signal Y and a carrier chrominance signal C which have been frequency multiplexed and can switch a band-pass type operation and a comb type operation on the basis of a count value from the line counter. In the example, whether the signal supplied from the input terminal 1 corresponds to the non-picture portion or the main picture portion is discriminated by the pulse supplied from the sync separating circuit 15 to the Y/C separating circuit 2. When it is determined that the signal of the main picture portion has been supplied, the Y/C separation is executed by the comb type operation. On the other hand, when it is decided that a helper signal has been inserted in the carrier chrominance signal C and the signal of the non-picture portion has been supplied, the Y/C separation is executed by the band-pass type operation so as not to exert an adverse influence on a modulation helper signal.

Among the separated signals, the carrier chrominance signal C is supplied to a PAL signal decoder 8 and is converted to color difference signals B-Y and R-Y. Since the signal to be treated is the PALplus signal, in the color difference signal B-Y, the foregoing helper signal as a vertical resolution reinforcement signal is inserted in the non-picture portions, that is, portions from the 24th to 59th lines, from the 275th to 310th lines, from the 336th to 371st lines, and from the 587th to 622nd lines.

The Y signal outputted from the Y/C separating circuit 2 is supplied to a low pass filter 7a. The color difference signals B-Y and R-Y outputted from the PAL decoder 8 are supplied to low pass filters 7b and 7c, respectively. The Y signal and the color difference signals B-Y and R-Y from which surplus high frequency components were eliminated by the low pass filters 7a, 7b, and 7c are supplied to A/D converters 9a, 9b, and 9c, respectively.

Although not shown, the low pass filter 7b to which the color difference signal B-Y in which the helper signal was inserted is controlled on the basis of a count value of the above-mentioned line counter. That is, when the count value is equal to a value corresponding to the non-picture portion, a filter function of the low pass filter 7b is turned off. This is because a large amount of high frequency components which are effective to the helper function are included in the helper signal and it is necessary to avoid that the high frequency components are cut off by the low pass filter.

The luminance signal Y and color difference signals B-Y and R-Y supplied to the A/D converters 9a, 9b, and 9c, respectively, are normalized and digitized to levels specified in the CCIR REC 601. In the regulations of the CCIR REC 601, the maximum value of the white level is set to a digital value of '235' and a black level (pedestal level) is set to '16'. With respect to the color difference signals, a level '128' is set to a gray level, the minimum level is set to '16', and the maximum level is set to a digital value of '240'. Fig. 3 shows an example of the normalization. The normalization is executed in the A/D converters 9a, 9b, and 9c on the basis of such an example.

In the following description, a numerical value sandwiched by ' ' denotes a digital value. The normalized color difference signals R-Y and B-Y are called color difference signals C_{R} and C_{B}, respectively. Subsequent processes of signals including the luminance signal Y are digital processes.

The signals normalized by the A/D converters 9a, 9b, and 9c are respectively supplied to corresponding input terminals of a PALplus recording side processing circuit 6. That is, the luminance signal Y is supplied to an input terminal 25, the color difference signal C_{B} in which the helper signal has been inserted into the non-picture portion is supplied to an input terminal 32, and the color difference signal C_{R} is supplied to an input terminal 33, respectively.

On the other hand, a count value outputted from the line counter (not shown) is supplied to the WSS detecting circuit 3. On the basis of the count value, a WSS signal in the 23rd line of the PALplus signal supplied to the WSS detecting circuit 3 is detected. For example, the WSS signal is detected by a slicer such that a threshold value is set at a predetermined level and a signal at a level that is equal to or larger than the threshold value is outputted. The detected WSS signal is supplied to a WSS rewriting circuit 4.

As mentioned above, the detected WSS signal includes information for discriminating the presence/absence of the helper signal or information for discriminating and controlling respective modes of the PALplus such as an aspect ratio and the like. The WSS signal is decoded by the WSS rewriting circuit 4 to which the WSS signal was supplied, thereby obtaining WSS data. Further, the contents of the WSS data are enabled to be rewritten. The rewritable WSS data is supplied to a data input terminal 51 of a DVCR recording unit 50. The WSS data is written into a data block called a TR pack by the DVCR recording unit 50.

When the WSS signal is not detected by the WSS detecting circuit 3, the television signal is regarded as a television signal according to the PAL system (hereinafter, abbreviated to a PAL signal).

The WSS signal detected by the WSS detecting circuit 3 is also supplied to a microcomputer 10. The microcomputer 10 is constructed by, for example, a microprocessor and can generate control signals for controlling other circuits and the like on the basis of operations of switches arranged on a panel surface of the apparatus, a control command sent as an infrared ray signal from a remote controller or the like, and the like.

In the microcomputer 10, bits of the supplied WSS signal are detected. The WSS bits are constructed by 14 bits and are used for discriminating various modes in the PALplus system. The contents of each of the WSS bits are as follows.
- The 0th bit (b0):: aspect information
- The 1st bit (b1):: aspect information
- The 2nd bit (b2):: aspect information
- The 3rd bit (b3):: odd-number parity bit of b0 to b2
- The 4th bit (b4) :: film bit
- The 5th bit (b5):: system of a color signal process
- The 6th bit (b6):: the presence or absence of a vertical resolution reinforcement signal
- The 7th bit (b7):: undefined
- The 8th bit (b8):: the presence or absence of credit titles of a character broadcasting
- The 9th bit (b9):: credit title mode information
- The 10th bit (b10):: credit title mode information
- The 11th bit (b11):: undefined
- The 12th bit (b12):: undefined
- The 13th bit (b13):: undefined

Fig. 4 schematically shows a data structure of a TR pack to which the WSS bits are recorded. As shown, one pack consists of five bytes (PC0 to PC4). The head one byte is a header and the remaining four bytes are data. The pack denotes a minimum unit of a data group and one pack is constructed by collecting related data. In the TR pack, a header byte PC0 is set to (66h). By the data of the TR data type, the type of data collected in the pack is discriminated. In case of a pack for storing the WSS bits, the data type is set to '0001'. The WSS bits are packed subsequent to the TR data type up to PC3. Data of a reference value of the white level is written in PC4.

Attention is paid to the presence or absence of the vertical resolution reinforcement signal represented by the 6th bit among the WSS bits in the invention. That is, when the 6th bit is set to, for example, '1' and it is assumed that the vertical resolution reinforcement signal, that is, the helper signal is included in the television signal supplied to the DVCR 300, a control signal is sent from the microcomputer 10 to the PALplus recording side signal processing circuit 6, which will be described hereinlater, so as to execute the vertical resolution reinforcing process by the helper signal. Simultaneously, a control signal is sent from the microcomputer 10 to a display 11 so as to display that the helper signal is included in the television signal supplied to the DVCR 300.

The display 11 is constructed by, for example, an LED (Light Emitting Diode) attached to a panel surface and a drive circuit of the LED and the LED is turned on on the basis of the control signal supplied. When the control signal is supplied from the microcomputer 10, the LED is turned on.

In the display by the display 11, the LED is used like a pilot lamp. The invention is not limited to such an example. For example, predetermined characters or a character train can be also displayed by the light-on. Further, the device used is not limited to the LED, but another device such as a filament lamp can be also used as long as it can be easily recognized when it is seen at a certain distance away from the lamp.

A helper killer signal from a helper killer mode control circuit 5 is supplied to the WSS rewriting circuit 4 and a helper killer input terminal 20 of the PALplus recording side processing circuit 6. The helper killer mode control circuit 5 is used to turn off the helper function, that is, the function of the vertical resolution reinforcement in the PALplus system by an instruction from the outside or the like.

The instruction from the outside to the helper killer control circuit 5 is performed by, for example, the control signal sent from the microcomputer 10. That is, an instruction to turn off the helper function is sent from a switch or a remote controller to the microcomputer 10. On the basis of the instruction, a predetermined control signal is sent from the microcomputer 10 to the WSS rewriting circuit 4 and PALplus recording side processing circuit 6. As such an instruction, for example, an operation of a switch arranged on the panel surface or an instruction from a control command sent from the remote controller can be also directly used without passing through the microcomputer 10.

When the helper function is turned OFF by the helper killer mode control circuit 5, in the WSS signal rewriting circuit 4, the data of the WSS signal on the 23rd line is rewritten to the contents indicating that no vertical resolution reinforcement signal is included by, for example, setting the 6th bit to '0'. Although the details will be described hereinlater, in the PALplus recording side processing circuit 6, the luminance signal Y in the period of the helper signal, that is, in the non-picture portion is replaced by a signal of a digital value of '16'. Each of the color difference signals C_{B} and C_{R} is replaced to a signal of the level of '128'. Further, the 23rd line in which the WSS signal has been recorded is replaced to a signal of the level of '64'.

When the signal supplied from the input terminal 1 is the PAL signal, the WSS data is not rewritten and the signals in the non-picture portion and the 23rd line are not replaced.

Fig. 5 shows an example of a construction of the foregoing PALplus recording side processing circuit 6. When it is instructed by the control signal from the microcomputer 10 that the signal to be supplied is recorded as a PALplus signal, the circuit records the demodulated helper signal inserted in the color difference signal C_{B} as a luminance signal Y. On the other hand, when it is instructed that the signal to be supplied is recorded while regarding that it is not a PALplus signal, the helper killer process is performed to the luminance signal Y and color difference signals C_{B} and C_{R} supplied to the PALplus recording side processing circuit 6 and the resultant signals are outputted.

In the WSS bits, when the supplied signal is decided to be the PALplus signal, the color difference signal C_{B} in which the helper signal was inserted for the period of time of the non-picture portion is supplied to an input terminal 26a of a switching circuit 26 via the input terminal 32 and is also supplied to a DC level shift circuit 24. The DC level shift circuit 24 adds a predetermined DC offset (called a DC set-up value) to the supplied color difference signal C_{B}. The DC offset corresponds to a normalization value of the color difference signal C_{B} in the A/D converter 9b and is set to a level of, for example, '64' as a digital value. The DC set-up value is obviously inserted into the latter half of the 23rd line and is also added to the demodulated helper reference signal and the helper signal which was inserted in the non-picture portion and was demodulated. The color difference signal C_{B} to which the DC set-up value was added is supplied to an input terminal 21b of a switching circuit 21.

The color difference signal C_{R} is supplied to an input terminal 27a of a switching circuit 27 via the input terminal 33.

The luminance signal Y is supplied to an input terminal 21a of the switching circuit 21 through the input terminal 25. The switching circuit 21 is controlled by the count value from the line counter for controlling the whole apparatus mentioned above. The input terminal 21b is selected for the period of time of the non-picture portion and in the 23rd line and the input terminal 21a is selected for the period of time of the main picture portion.

That is, when referring to Fig. 19, the output terminal 21b is selected in the upper non-picture portions of the 23rd to 59th lines, the output terminal 21a is selected in the main picture portion of the 60th to 274th lines, and the output terminal 21b is selected in the lower non-picture portions of the 275th to 310th lines. The output terminal 21b is selected in the upper non-picture portions of the 336th to 371st lines, the output terminal 21a is selected in the main picture portions of the 372nd to 586th lines, and the output terminal 21b is selected in the lower non-picture portions of the 587th to 622nd lines.

Both of the switching circuit 26 to which the color difference signal C_{B} is supplied and the switching circuit 27 to which the color difference signal C_{R} is supplied are controlled by a count value from the line counter for the whole apparatus. For the period of time of the non-picture portion, an input terminal 26b is selected by the switching circuit 26 and an input terminal 27b is selected by the switching circuit 27, respectively. The digital value '128' at the gray level supplied to the input terminals 26b and 27b is led to a common output terminal of the switching circuits.

For the period of time of the main picture portion, the input terminal 26a is selected by the switching circuit 26 and the input terminal 27a is selected by the switching circuit 27, respectively. The color difference signals C_{B} and C_{R} are led to a common output terminal of the switching circuits 26 and 27.

By controlling the switching circuits 21, 26, and 27 for the period of time of the non-picture portion and in the 23rd line and for the period of the main picture portion as mentioned above, the reference signal of the helper signal and the helper signal from the color difference signal C_{B} supplied from the input terminal 32 are inserted for the periods of time of the non-picture portions of the luminance signal Y.

An output from the common output terminal of the switching circuit 21 is supplied to an input terminal 22a of a switching circuit 22. A digital value at a level of '64' that is equal to the DC set-up value in the DC level shift circuit 24 is supplied to an input terminal 22b of the switching circuit 22. The switching circuit 22 is controlled by the count value from the line counter. The input terminal 22b is selected in the 60th to 62nd lines and in the 372nd to 374th lines. The input terminal 22a is selected in the other lines.

In the switching circuits 26 and 27 to which the color difference signals C_{B} and C_{R} are supplied, the input terminals 26b and 27b are respectively selected in the 60th to 62nd lines and in the 372nd to 374th lines and the gray level '128' is led to a common output terminal of those switching circuits.

The luminance signal Y which was outputted from the switching circuit 22 and in which the helper signal has been inserted in the non-picture portions and the reference signal of the helper signal has been inserted in the 23rd line is supplied to a Y signal/helper signal input terminal of a helper killer circuit 23. The color difference signals C_{B} and C_{R} outputted from the output terminals of the switching circuits 26 and 27 are supplied to a C_{B} signal input terminal and a C_{R} signal input terminal of the helper killer circuit 23, respectively.

In the helper killer circuit 23, ON/OFF of the helper killer function is controlled by the helper killer signal supplied from the helper killer control circuit 5 via the helper killer input terminal 20. The helper killer circuit 23 is also controlled by the count value from the line counter for controlling the whole apparatus.

The helper killer circuit 23 is constructed by a plurality of switching circuits corresponding to an input signal system and a digital level source for supplying digital values at predetermined levels to the switching circuits. When the helper killer function is ON, in the 23rd line and the period of time of the non-picture portion in which the WSS signal was inserted, the luminance signal Y (helper reference signal and helper signal in such a period of time) is replaced by a pedestal level at a level '16' and both of the color difference signals C_{B} and C_{R} are replaced by the gray level of a level '128' and are led to the output terminals of the signals by the switching circuits and the digital level source. For the period of time of the main picture portion, the signals supplied from the signal input terminals are not processed but are led to the output terminals of the signals as they are.

On the other hand, when the helper killer function is OFF, the signals supplied from the signal input terminals are not processed but are led to the output terminals of the signals as they are in all lines.

The luminance signal Y which was outputted from the Y signal/helper signal output terminal of the helper killer circuit 23 and in which the helper signal has been inserted in the non-picture portion is supplied as a recording luminance signal Y to an output terminal 205. The color difference signal C_{B} outputted from the C_{B} signal of the helper killer circuit 23 is supplied as a recording color difference signal C_{B} to an output terminal 38. The color difference signal C_{R} outputted from a C_{R} signal output terminal is supplied as a recording color difference signal C_{R} to an output terminal 39.

The recording luminance signal Y outputted from an output terminal 37 of the PALplus recording side processing circuit 6 is supplied to an input terminal 52 of the digital VCR 50. The recording color difference signals C_{B} and C_{R} outputted from the output terminals 38 and 39 are supplied to a line sequencing circuit 45, by which line-sequenced color difference signals C_{B}/C_{R} are derived and are supplied to an input terminal 53 of the digital VCR 50.

When it is decided by the WSS bits that the supplied signal is not the PALplus signal, the input terminals 21a and 22a are selected by the switching circuits 21 and 22 and the input terminals 26a and 27a are selected by the switching circuits 26 and 27, respectively, on the basis of the control of the microcomputer 10. The helper killer function is turned OFF even in the helper killer circuit 23. Consequently, in this case, the supplied signal is not processed in the PALplus recording side processing circuit 6 as mentioned above and is led to the output terminals 37, 38 and 39.

Fig. 6 shows an example of a construction on the recording side of the DVCR recording and reproducing unit 50 for recording the signal outputted from the foregoing PALplus recording side processing circuit 6. In Fig. 6, the recording luminance signal Y and recording color difference signals C_{B}/C_{R} as component color video signals are supplied to the input terminals 52 and 53. Among them, the helper signal is inserted in the recording luminance signal Y for a period of time of the non-picture portion.

The supplied recording luminance signal Y and recording color difference signals C_{B}/C_{R} are supplied to a valid information extracting circuit 55. By the valid information extracting circuit 55, the data out of the valid screen such as vertical blanking period, horizontal blanking period, and the like is dropped out and only the data in the valid screen is extracted. As valid lines, the 23rd to 310th lines of the first field and the 335th to 622nd lines of the second field are used.

In case of the PALplus, the data of the aspect ratio and the WSS signal indicative of the identification signal indicative of the presence or absence of the helper signal or the like are inserted in the 23rd line and the reference signal of white 100% is inserted in the 623rd line. However, since the 623rd line doesn't exist in the valid line, it is eliminated here.

An output of the valid information extracting circuit 55 is supplied to a block forming and shuffling circuit 56. In the block forming and shuffling circuit 56, the output is divided into (8 x 8) blocks and the compression is averaged in the whole screen and a shuffling is also executed to prevent that the data is concentratedly dropped out due to a clog of the head, a damage of the tape, or the like.

An output of the block forming and shuffling circuit 56 is supplied to a compressing circuit 57. The compressing circuit 57 compresses the video data by a DCT transformation and a variable length encoding. Namely, the compressing circuit 57 has a DCT transforming circuit, a quantizer for quantizing the data which was DCT transformed, an estimator for estimating a total amount of codes and deciding an optimum quantizer, and a variable length encoding circuit for compressing the data by using a two-dimensional Huffman code. In the compressing circuit 57, the data in the time region of (8 x 8) is converted into coefficient data of the frequency region of (8 x 8) and is quantized and is variable length encoded.

An output of the compressing circuit 57 is supplied to a frame forming circuit 58. In the frame forming circuit 58, the video data is inserted into a predetermined sync block by a predetermined rule. An output of the frame forming circuit 58 is supplied to a VAUX adding circuit 59. VAUX data is supplied from a VAUX generating circuit 60 to the VAUX adding circuit 59. The data from a controller 80 and the VAUX data are supplied to the VAUX generating circuit 60. The video data added with the VAUX data by the VAUX adding circuit 59 is supplied to a multiplexer 61.

As data which is written from the WSS rewriting circuit 4 shown in Fig. 2 to a TR pack, WSS data is supplied to the input terminal 51. The supplied data is sent to the controller 80. Those data is included in the VAUX data which is generated from the VAUX generating circuit 60. Specifically speaking, the TR pack (header 66h) is provided for the VAUX and the data of the identification signal is recorded in the TR pack. As mentioned above, the WSS data is recorded in PC1 to PC3 of the TR pack. A communication can be executed between the microcomputer 10 and controller 80 through a terminal 54.

The audio signal is supplied to an input terminal 62. The audio signal is supplied to an A/D converter 63. The audio signal is digitized by the A/D converter 63. The audio signal is supplied to an audio signal processing circuit 64. The audio data is inserted into a predetermined sync block by the audio processing circuit 64. An output of the audio signal processing circuit 64 is supplied to an AAUX adding circuit 65.

AAUX data is supplied from an AAUX generating circuit 66 to the AAUX adding circuit 65 under the control from the controller 80. The AAUX data is added to the audio data by the AAUX adding circuit 65. The audio data added with the AAUX data is supplied to the multiplexer circuit 61.

A subcode is generated by a subcode generating circuit 67. The subcode data is used for a high speed search. The subcode data is supplied to the multiplexer circuit 61.

In the multiplexer circuit 61, the video data, audio data, and subcode data are switched. An output of the multiplexer circuit 61 is supplied to an error correction encoding circuit 68. An error correction code is added to the recording data by the error correction encoding circuit 68. An output of the error correction encoding circuit 68 is supplied to a channel encoder 69. Recording data is 24/25 converted by the channel encoder 69. Further, a coding process of partial response class 4 suitable for a digital recording is executed. An output of the channel encoder 69 is supplied to a head 70 through a recording amplifier (not shown) and is recorded to a recording tape by a predetermined format.

A case where the signal recorded on the magnetic tape is reproduced by the method as mentioned above will now be described. Fig. 7 shows an example of a construction on the reproduction side of the DVCR recording and reproducing unit 50. In Fig. 7, a reproduction signal of a head 101 is supplied to a channel decoder 102 through a reproducing amplifier (not shown). The reproduction signal is demodulated by the channel decoder 102. An output of the channel decoder 102 is supplied to an error correcting circuit 103. An error correcting process is executed by the error correcting circuit 103. An output of the error correcting circuit 103 is supplied to a demultiplexer 104.

Reproduction data of an audio area, reproduction data of a video area, and reproduction data of a subcode area are separated by the demultiplexer 104.

The reproduction data of the audio area is supplied to an audio processing circuit 107. The AAUX data in the reproduction data of the audio area is detected by an AAUX decoding circuit 108. The AAUX data is supplied to a controller 120. Processes such as time base conversion, interpolation, and the like are executed in the audio processing circuit 107. An output of the audio processing circuit 107 is supplied to a D/A converter 110. An output of the D/A converter 110 is outputted from an output terminal 111.

The reproduction data of the video area is supplied to a deframing circuit 105. The VAUX data in the reproduction data of the video area is detected by a VAUX decoding circuit 106. The VAUX data is supplied to the controller 120.

The WSS data is derived from PC1 to PC3 of the TR pack of the VAUX. The WSS data is outputted from a data output terminal 117 and is sent to a WSS signal encoder 152, which will be explained hereinlater.

The reproduction data of the subcode area is detected by a subcode decoding circuit 109. The subcode data is supplied to the controller 120.

An output of the deframing circuit 105 is supplied to a decompressing circuit 112. The decompressing circuit 112 converts the video signal which was compressed and recorded into the original video signal of the time region by a decoding of a variable length code and an inverse DCT transformation. An output of the decompressing circuit 112 is supplied to a deshuffling and deblocking circuit 113. The reproduction component color video signals Y and C are obtained from the deshuffling and deblocking circuit 113. Among those signals, the signal C is obtained by line sequencing the color difference signals C_{B} and C_{R}.

The reproduction component color video signals Y and C are supplied to an information adding circuit 114. The information adding circuit 114 adds a horizontal sync signal, a vertical sync signal, and the like. In an output of the information adding circuit 114, the reproduction luminance signal Y is outputted from an output terminal 115 and the reproduction chrominance signal C is outputted from an output terminal 116.

Fig. 8 shows an example of a whole construction for processing the reproduction signal outputted from the foregoing DVCR recording and reproducing unit 50. The reproduction luminance signal Y outputted from the output terminal 115 of the DVCR recording and reproducing unit 50 is supplied to an input terminal 202 of a PALplus reproducing side processing circuit 151. Although not shown, the reproduction luminance signal Y supplied from the output terminal 115 is also supplied to a sync separating circuit and vertical and horizontal sync signals are separated and extracted. Those separated and extracted sync signals are supplied to a line counter for controlling the whole apparatus and the lines are counted.

The reproduction chrominance signal C outputted from the output terminal 116 of the DVCR recording and reproducing unit 50 is supplied to a line sequential interpolating circuit 150. In the line sequential interpolating circuit 150, the line sequenced reproduction chrominance signal C is controlled on the basis of a count value outputted from the foregoing line counter and is separated to the color difference signals C_{B} and C_{R}. The color difference signal C_{B} is supplied to an input terminal 200 of the PALplus reproducing side processing circuit 151. The color difference signal C_{R} is supplied to an input terminal 201.

A helper killer signal from the helper killer mode control circuit 53 is supplied to both of the WSS encoder 153 and an input terminal 204 of the PALplus reproducing side processing circuit 151. In a manner similar to the helper killer mode control circuit 5 in the construction on the recording side shown in Fig. 2 mentioned above, the helper killer mode control circuit 53 turns off the helper function by a control signal from the microcomputer 10 based on an input from, for example, the outside, namely, cuts off a function of a vertical resolution reinforcement in the PALplus system.

The WSS data is outputted from the data output terminal 117 of the DVCR recording and reproducing unit 50. The WSS data is supplied to the microcomputer 10 and is also supplied to the WSS encoder 152. In the microcomputer 10, whether the reproduction signal is the PALplus signal or not is discriminated on the basis of the supplied WSS bits. Namely, when no WSS bit exists, it is regarded that the reproduction signal is the PAL signal. When the WSS bits exist, in the WSS encoder 152, the supplied WSS data is encoded and is set to a signal that can be recognized by a television receiver or the like of the PALplus system.

The control signal from the microcomputer 10 is also supplied to the WSS encoder 152. When the WSS bits exist and the reproduction signal is the PALplus signal, in the case where the helper killer function is turned on by a foregoing helper killer control circuit 153, the WSS data is rewritten at the time of the encoding of the WSS data. In the foregoing bit construction of the WSS data, the data of b6 is rewritten in accordance with ON/OFF of the helper killer function. Namely, when the helper killer function is OFF, b6 is set to '1'. When it is ON, b6 is set to '0'. b0 to b5, b7, and b9 to b13 are unchanged. b8 is set to '0'. However, there is a case where b0 to b3 indicative of the aspect ratio are changed by a selection of the user.

In the WSS encoder 152, a reference signal of the helper signal is formed. The WSS signal and the reference signal of the helper signal are arranged at predetermined positions in the 23rd line and are supplied to an input terminal 156a of a switching circuit 156.

Fig. 9 shows an example of a construction of the foregoing PALplus reproducing side processing circuit 151. When it is instructed that the signal which is supplied is the PALplus signal by a control signal from the microcomputer 10 based on the WSS data, as for this circuit, a predetermined DC set-up value is added to the reproduction luminance signal Y and is inserted. The DC set-up value is removed from the helper signal and the reference signal of the helper signal. On the other hand, when it is determined that the signal which is supplied is not the PALplus signal, in the PALplus reproducing side processing circuit 151, the signal which is supplied is outputted as it is without being subjected to any process.

When the supplied signal is the PALplus signal, the reproduction luminance signal Y is supplied to a Y signal input terminal of a helper killer circuit 210 through the input terminal 202 and is also supplied to a DC level shift circuit 211. When the reproduction signal is the PALplus signal, the helper signal added with the predetermined DC set-up value is inserted to the supplied reproduction luminance signal Y for the period of time of the non-picture portion by the recording apparatus as mentioned above, and the reference signal of the helper signal added with the DC set-up value is inserted to the 23rd line. In the DC level shift circuit 211, the added DC set-up value is removed. In this case, since the signal is selectively supplied to the post stage for the period of time of the non-picture portion by a switching circuit 212 (which will be explained hereinlater) arranged on the output side of the circuit, in the DC level shift circuit 211, even if the DC level is shifted for the whole reproduction luminance signal Y, no problem will occur. The reproduction luminance signal Y from which the DC set-up value was removed is supplied to an input terminal 212b of the switching circuit 212.

The reproduction color difference signal C_{B} is supplied to an input terminal 212a of the switching circuit 212 through the input terminal 200. The switching circuit 212 is controlled by the count value from the line counter (not shown) for controlling the whole apparatus. When the count value is equal to a value indicative of the upper and lower non-picture portions, the input terminal 212b is selected. When it is equal to a value indicative of the main picture portion, the input terminal 212a is selected. Even in case of the value showing the 23rd line, the input terminal 212b is also selected.

Namely, with reference to Fig. 28, the output terminal 212b is selected in the upper non-picture portion of the 23rd to 59th lines, the output terminal 212a is selected in the main picture portion of the 60th to 274th lines, and the output terminal 212b is selected in the lower non-picture portion of the 275th to 310th lines. The output terminal 212b is selected in the upper non-picture portion of the 336th to 371st lines, the output terminal 212a is selected in the main picture portion of the 372nd to 586th lines, and the output terminal 212b is selected in the lower non-picture portion of the 587th to 622nd lines.

By controlling the switching circuit 212 for the period of time of the main picture portion and the periods of time of the non-picture portions as mentioned above, the helper signals inserted in the periods of time of the non-picture portions of the reproduction luminance signal Y are inserted in the period of time of the non-picture portion of the reproduction color difference signal C_{B}. The reference signal of the helper signal inserted in the 23rd line of the reproduction luminance signal Y is inserted in the 23rd line of the reproduction color difference signal C_{B}. The reproduction color difference signal C_{B} in which the helper signal and the reference signal of the helper signal were inserted at predetermined line positions as mentioned above is supplied from a common output terminal of the switching circuit 212 to a C_{B} signal/helper signal input terminal of the helper killer circuit 23.

The reproduction color difference signal C_{R} is supplied to a C_{R} signal input terminal of the helper killer circuit 210 through the input terminal 201.

As mentioned above, in the helper killer circuit 210, ON/OFF of the helper killer function is controlled by the helper killer signal supplied from the helper killer control circuit 153 through the helper killer input terminal 20. The helper killer circuit 210 is also controlled by the count value from the line counter to control the whole apparatus.

The helper killer circuit 210 is constructed by a plurality of switching circuits corresponding to a signal system of the input and a digital level source for supplying a digital value of a predetermined level to those switching circuits. When the helper killer function is ON, by those switching circuits and digital level source, in the periods of the 23rd line and non-picture portion in which the WSS signal has been inserted, the reproduction luminance signal Y is replaced to a pedestal level of level '16', the reproduction color difference signals C_{B} (in this period, the helper reference signal and the helper signal) and C_{R} are replaced to a gray level of level '128', and they are derived to output terminals of the signals, respectively. In the period of time of the main picture portion, the signal supplied from each signal input terminal is derived to an output terminal of each signal as it is without being subjected to any process.

On the other hand, when the helper killer function is OFF, the signal supplied from each signal input terminal is derived to an output terminal of each signal as it is without being subjected to any process in all lines.

The reproduction luminance signal Y outputted from the Y signal output terminal of the helper killer signal circuit 210 is supplied to the output terminal 205. The reproduction color difference signal C_{B} which was outputted from the C_{B} signal/helper signal output terminal and in which the reference signal of the helper signal was inserted to the 23rd line and the helper signal was inserted in the non-picture portion is supplied to an output terminal 206. The reproduction color difference signal C_{R} outputted from the C_{R} signal output terminal is supplied to an output terminal 207.

When it is determined that the signal supplied to the PALplus reproducing side processing circuit 151 is not the PALplus signal, the input terminal 212a is selected by the switching circuit 212 of the PALplus reproducing side processing circuit 151. The helper killer circuit 210 is always OFF. Therefore, the signals supplied to the PALplus reproducing side processing circuit 151 are derived to the output terminals 205, 206, and 207 as they are without being subjected to any process.

The reproduction luminance signal Y outputted from the output terminal 205 of the PALplus reproducing side processing circuit 151 and the reproduction color difference signals C_{B} and C_{R} outputted from the output terminals 206 and 207 are respectively supplied to D/A converters 154a, 154b, and 154c through a display signal generating circuit 220. The display signal generating circuit 220 generates a character train on the basis of a control signal sent from the microcomputer 10 and multiplexes the character train to the reproduction luminance signal Y and color difference signals C_{B} and C_{R} so that they can be displayed on a reproduction screen.

The reproduction luminance signal Y and the reproduction color difference signals C_{B} and C_{R} supplied to the D/A converters 154a, 154b, and 154c are converted into analog signals and become the reproduction luminance signal Y and the color difference signals B-Y and R-Y in which the analog converted helper signals were inserted in the non-picture portions and are respectively supplied to a PAL encoder 155, respectively. The signals after passing through the D/A converters are processed as analog signals.

The PAL encoder 155 includes a line sequencing circuit and line sequences the supplied reproduction color difference signals B-Y and R-Y. The line sequenced signal is modulated and outputted as a carrier chrominance signal C. In the case where the process of the PALplus signal has been performed, the helper reference signal is inserted to the 23rd line in the carrier chrominance signal C and the helper signals are inserted in the non-picture portions. The carrier chrominance signal C is supplied to a Y/C mixing circuit 157 and is also supplied to an output terminal 160 of a Y/C separating output terminal 158.

The reproduction luminance signal Y is outputted from the PAL encoder 155 and is supplied to an input terminal 156b of the switching circuit 156. As mentioned above, the signal which was outputted from the WSS encoder 152 and in which the WSS signal and reference signal were arranged at predetermined positions as a 23rd line is supplied to the input terminal 156a of the switching circuit 156.

The switching circuit 156 is controlled by the count value from the line counter (not shown) for controlling the whole apparatus. When the process of the PALplus signal is executed, the input terminal 156a is selected in the 23rd line and the input terminal 156b is selected in the other lines. In this case, therefore, the reproduction luminance signal Y which is supplied from the PAL encoder 155 is replaced to the WSS signal and reference signal supplied from the WSS encoder 152 in the 23rd line. Thus, the WSS signal is inserted to the 23rd line and the reproduction luminance signal Y is set to the signal of the inherent PALplus system. On the other hand, when the process is not for the PALplus signal, the input terminal 156b is fixedly selected.

The reproduction luminance signal Y which was outputted from the switching circuit 156 and in which the WSS signal was inserted in the PALplus signal is supplied to the Y/C mixing circuit 157 from the common output terminal of the switching circuit 156. The reproduction luminance signal Y is also supplied to an output terminal 159 of the Y/C separating output terminal 158. The reproduction luminance signal Y and chrominance signal C supplied to the Y/C mixing circuit 157 are mixed and become a composite video signal of the PALplus system. The composite video signal is derived to an output terminal 161. The reproduction signals derived to the Y/C separating output terminal 158 and output terminal 161 are supplied to a television monitor, an analog VCR, or the like.

A signal processing mode when the PALplus signal and PAL signal are processed by the DVCR according to the invention will now be described. As mentioned above, in the invention, whether the signal processing mode of the apparatus is set into a PALplus recording (reproducing) mode or a PAL recording (reproducing) mode for a signal supplied to the DVCR, namely, a signal supplied from the outside for a recording or a signal supplied by being reproduced from a cassette tape in the DVCR is automatically discriminated.

Fig. 10 shows an example of conditions upon discrimination. First, as a first condition, whether the apparatus itself has been set for the PAL or not is discriminated. In the DVCR, by performing a predetermined setting to the apparatus, the invention can be also made correspond to another signal system such as NTSC system or SECAM system. Information indicating to which system the DVCR corresponds has previously been written in, for example, an ROM owned by the apparatus. By reading out such information by the microcomputer 10, such a discrimination is performed.

As a second condition, whether the WSS bits are included in the signal or not is discriminated. Upon recording, such a discrimination is performed by checking whether the WSS signal has been inserted in the supplied signal or not. Upon reproduction, whether there is a TR pack in which the WSS bits have been recorded or not is discriminated by checking a TR pack header.

As a third condition, a check is made to see if a bit train comprising b0, b1, and b2 among the WSS bits is equal to '110' or '101'. When those bits satisfy this condition, it is regarded that the signal is displayed at the center of the screen at an aspect ratio of 16 : 9. As a fourth condition, whether b6 among the WSS bits is equal to '1' or not is discriminated. When b6 is equal to '1', this signal includes the helper signal. As a fifth condition, although there is ON/OFF of the helper killer function, this condition actually doesn't exert an influence on a mode discrimination.

If all of the foregoing first to fifth conditions are satisfied and the operation of the apparatus is the recording operation, the mode is set to the PALplus recording mode. Similarly, if all of the foregoing first to fifth conditions are satisfied and the operation of the apparatus is the reproducing operation, the mode is set to the PALplus reproducing mode. In those PALplus recording mode and PALplus reproducing mode, as mentioned above, the display 11 comprising, for example, an LED is lit on by the control of the microcomputer 10.

On the other hand, when any one of the foregoing first to fifth conditions is not satisfied, the mode is set to the PAL recording mode upon recording and to the PAL reproducing mode upon reproduction. In those PAL recording mode and PAL reproducing mode, the display 11 is not lit on.

Fig. 11 shows a classification of the signal processing modes. The processes are first separated into the processes upon recording and the processes upon reproduction. Upon recording, the ON/OFF of the helper killer function is selected by the user. When the signal is supplied from the outside to the DVCR, the mode discrimination as mentioned above is automatically executed.

Thus, as shown in the diagram, the signal processing modes in the DVCR are classified and the signal process based on the classification is executed, respectively. Namely, when the helper killer function is OFF in the PALplus recording mode, the PALplus recording in which the PALplus signal is recorded as it is is executed. When the helper killer function is ON, the helper killer recording in which the helper signal is replaced to the pedestal level and the WSS signal is rewritten and the like is performed.

On the other hand, the helper signal and WSS signal are not included in the PAL signal. In the PAL recording mode, therefore, the PAL recording in which the PAL signal is recorded as it is irrespective of ON/OFF of the helper killer function is executed.

Even upon reproduction, the classification of the signal processes is executed in a manner similar to the case of recording. The selection of ON/OFF of the helper killer function is performed by the user. When the signal is supplied to the DVCR by the reproduction of a cassette tape, the mode discrimination as mentioned above is automatically executed.

Thus, the signal processing modes in the DVCR are classified as shown in the diagram and the signal process based on the classification is executed, respectively. Namely, when the helper killer function is OFF in the PALplus reproducing mode, the PALplus reproduction in which the reproduced PALplus signal is outputted as it is is executed. If the helper killer function is ON, the helper killer reproduction in which the helper signal is replaced to the pedestal level and the WSS data is rewritten and the like is executed for the reproduction signal.

On the other hand, the helper signal is not included in the PAL signal. In the PAL reproducing mode, therefore, the PAL reproduction in which the reproduced PAL signal is outputted as it is irrespective of ON/OFF of the helper killer function is executed.

Fig. 12 specifically shows a front panel of an example of the DVCR 300 to which the invention is applied. Reference numeral 400 denotes the whole front panel. On the front panel 400, there are provided: a power switch 401; a tape cassette inserting portion 402; an ejection button 403 which is depressed when a cassette is ejected; a display panel 404; a lid 405 to cover a control panel; and lids 406 and 407 to cover a board on which connectors for signal input and output and the like are arranged. The display panel 404 is constructed by a display device such as display tube, liquid crystal, or the like and a time display, a channel display, an operating mode display, and the like are performed there. A photosensing unit of a remote control signal is provided in an area of the display panel 404.

LEDs (light emitting diodes) 408 to 416 for a mode display are provided on both sides of a display area (shown by a broken line) of the display panel 404. The LED 408 shows the PALplus recording/reproducing mode and corresponds to the display 11 mentioned above. In the recording/reproducing mode of the signal of the PALplus system, the LED 408 is lit on. In the recording/reproducing mode of the PAL system, the LED 408 is not lit on.

The LED 409 is provided for displaying whether the aspect ratio is wide or not. In case of the aspect ratio of (9 : 16), the LED 409 is lit on. In case of the aspect ratio of (3 : 4), the LED 409 is not lit on. The LEDs 410 and 411 are provided for displaying the number of bits of a digital audio signal. When one sample of the digital audio signal consists of 16 bits, the LED 410 is lit on. In case of 12 bits, the LED 411 is lit on.

The LED 412 is lit on when the VCR is operating. The LEDs 413, 414, 415, and 416 display the mode of audio. In case of the stereophonic mode, the LED 413 is lit on. In case of the audio multiplexing mode, the LED 414 is lit on. Further, in the audio multiplexing mode, when the main sound is selected, the LED 415 is lit on and, when the sub sound is selected, the LED 416 is lit on. A display tube or the like other than the LED can be also used as a display device.

Fig. 13 shows an example of a construction of a menu picture plane to select ON/OFF of the helper killer function. The menu picture plane is generated by the foregoing display signal generating circuit 220 by the control of the microcomputer 10 based on an instruction of a control command sent from a remote controller. For example, in the remote controller, by operating a key of the menu display, the menu picture plane can be displayed on the television monitor 301 connected to the DVCR 300.

In the example, nine items shown in the diagram can be set. An item to be set is selected by an up/down key provided for the remote controller. For the selected item, its function can be set by a left/right key. The setting of the helper killer function is arranged as the eighth set item and its ON/OFF can be controlled by the left/right key.

Namely, when the signal to be recorded/reproduced is the PALplus signal, if "ON" is selected, the helper killer recording is set upon recording and the helper killer reproduction is set upon reproduction. When "OFF" is selected, on the other hand, the PALplus recording is set upon recording and the PALplus signal is recorded as it is. Upon reproduction, the PALplus reproduction is set and a picture plane in which a vertical resolution is reinforced by the helper signal is displayed on the television monitor 301.

In the above description, although it is assumed that the invention is applied to the signals of the PAL system and the PALplus system, the invention is not limited to this example. The invention essentially relates to the automatic discrimination about the presence or absence of the insertion of the vertical resolution reinforcement signal, its specific expression, and the selection of ON/OFF of the process by the vertical resolution reinforcement signal by the user. Therefore, the invention can be also applied to the signals of, for instance, the NTSC system and EDTV-II system.

In the above description, although the television signal in the analog form is supplied upon recording to the DVCR to which the invention is applied, the signal in the digital form can be also supplied to the DVCR. In such a case, the digital signal is directly supplied to the DVCR recording and reproducing unit 50. In this instance, the WSS data included in this signal is supplied from the DVCR recording and reproducing unit 50 to the microcomputer 10 through the terminal 54. For example, when the supplied digital signal is recorded onto the cassette tape by turning on the helper killer function, b6 of the WSS data is rewritten to '0' and the rewritten WSS data is supplied to the DVCR recording and reproducing unit 50 and recorded. When reproducing the cassette tape, the processing mode is set into the PAL reproducing mode on the basis of the information of the rewritten WSS data, so that the helper killer function is validated and the reproduction in which the vertical resolution is not reinforced can be reproduced.

As described above, according to the invention, in the DVCR, information about whether the signal reproduced by the cassette tape or the signal supplied from the outside is the PALplus signal or not can be displayed. Therefore, there is an effect such that the user can easily know whether the signal that is processed at present in the DVCR is the PAL signal or the PALplus signal.

According to the invention, the user can arbitrarily set whether the helper killer is performed upon reproduction in the DVCR or not. Therefore, even in the case where the television monitor connected to the DVCR doesn't correspond to the PALplus system, there is an effect that it is easily possible to construct in a manner such that even if the cassette tape on which the PALplus signal has been recorded is reproduced by the DVCR, an adverse influence by the helper signal is not exerted on the displayed picture plane.

There is also an effect such that by turning on the helper killer upon reproduction, the reproduction signal from the DVCR can be supplied to, for example, an analog VCA which doesn't correspond to the PALplus system and can be recorded.

According to the invention, the user can arbitrarily set whether the helper killer is executed upon recording in the DVCR or not. Therefore, in case of recording the PALplus signal by the DVCR, for instance, there is an effect such that by turning on the helper killer, a recording tape such that it can be also reproduced by a DVCR connected to the television monitor which doesn't correspond to the PALplus system can be formed.

## Claims

1. A recording apparatus of a television signal in which one of a first television signal of a format including a resolution reinforcement signal and an identification signal which were inserted in a vertical blanking period and a second television signal of a format which does not include said resolution reinforcement signal and said identification signal is converted into a digital recording signal and recorded onto a recording medium, **characterized by** comprising:
detecting means for detecting whether an input signal is either one of said first and second television signals by using said identification signal and generating a detection signal;
display means for displaying that said input signal is said first television signal in response to said detection signal;
instructing means for selectively instructing whether said resolution reinforcement signal is recorded or not and generating a selection signal;
signal processing means which is controlled on the basis of said detection signal and said selection signal and forms a digital recording signal; and
means for recording said detection signal and said selection signal together with the digital recording signal from said signal processing means onto the recording medium.

2. A recording method of a television signal whereby one of a first television signal of a format including a resolution reinforcement signal and an identification signal which were inserted in a vertical blanking period and a second television signal of a format which does not include said resolution reinforcement signal and said identification signal is converted into a digital recording signal and recorded onto a recording medium, **characterized by** comprising:
a step of detecting whether an input signal is either one of said first and second television signals by using said identification signal and generating a detection signal;
a step of displaying that said input signal is said first television signal in response to said detection signal;
a step of selectively instructing whether said resolution reinforcement signal is recorded or not and generating a selection signal;
a step which is controlled on the basis of said detection signal and said selection signal and forms a digital recording signal; and
a step of recording said detection signal and said selection signal together with said digital recording signal onto the recording medium.

3. A reproducing apparatus of a television signal for reproducing a digital reproduction signal from a recording medium, **characterized by** comprising:
means for reproducing the recording medium and generating the digital reproduction signal;
detecting means for detecting whether said digital reproduction signal is a first reproduction signal of a format including a resolution reinforcement signal or a second reproduction signal of a format which does not include said resolution reinforcement signal from a control signal included in said digital reproduction signal and generating a detection signal;
display means for displaying that said digital reproduction signal is said first reproduction signal in response to said detection signal;
instructing means for selectively instructing whether said resolution reinforcement signal is added to an output signal or not and generating a selection signal; and
signal processing means which is controlled on the basis of said detection signal and said selection signal and outputs, as a reproduction signal, one of a first television signal of a format including the resolution reinforcement signal and an identification signal which were inserted in a vertical blanking period and a second television signal of a form which does not include said resolution reinforcement signal and said identification signal.

4. A reproducing method of a television signal for reproducing a digital reproduction signal from a recording medium, **characterized by** comprising:
a step of reproducing the recording medium and generating the digital reproduction signal;
a step of detecting whether said digital reproduction signal is a first reproduction signal of a format including a resolution reinforcement signal or a second reproduction signal of a format which does not include said resolution reinforcement signal from a control signal included in said digital reproduction signal and generating a detection signal;
a step of displaying that said digital reproduction signal is said first reproduction signal in response to said detection signal;
a step of selectively instructing whether said resolution reinforcement signal is added to an output signal or not and generating a selection signal; and
a step which is controlled on the basis of said detection signal and said selection signal and outputs, as a reproduction signal, one of a first television signal of a form including the resolution reinforcement signal and an identification signal which were inserted in a vertical blanking period and a second television signal of a format which does not include said resolution reinforcement signal and said identification signal.

5. A recording and reproducing apparatus of a television signal, in which one of a first television signal of a format including a resolution reinforcement signal and an identification signal which were inserted in a vertical blanking period and a second television signal of a format which does not include said resolution reinforcement signal and said identification signal is converted into a digital recording signal and recorded onto a recording medium, and
a digital reproduction signal is reproduced from said recording medium, **characterized by** comprising:
detecting means for detecting whether an input signal is either one of said first and second television signals by using said identification signal and generating a detection signal;
display means for displaying that said input signal is said first television signal in response to said detection signal;
instructing means for selectively instructing whether said resolution reinforcement signal is recorded or not and generating a selection signal;
signal processing means which is controlled on the basis of said detection signal and said selection signal and forms a digital recording signal;
means for recording said detection signal and said selection signal together with the digital recording signal from said signal processing means onto the recording medium;
means for reproducing said recording medium and generating a digital reproduction signal;
detecting means for detecting whether said digital reproduction signal is a first reproduction signal of a format including the resolution reinforcement signal or a second reproduction signal of a format which does not include said resolution reinforcement signal from a control signal included in said digital reproduction signal and generating a detection signal;
display means for displaying that said digital reproduction signal is said first reproduction signal in response to said detection signal;
instructing means for selectively instructing whether said resolution reinforcement signal is added to an output signal or not and generating a selection signal; and
signal processing means which is controlled on the basis of said detection signal and said selection signal and outputs, as a reproduction signal, one of the first television signal of a format including the resolution reinforcement signal and the identification signal which were inserted in a vertical blanking period and the second television signal of a format which does not include said resolution reinforcement signal and said identification signal.

6. A recording and reproducing method of a television signal, whereby one of a first television signal of a format including a resolution reinforcement signal and an identification signal which were inserted in a vertical blanking period and a second television signal of a format which does not include said resolution reinforcement signal and said identification signal is converted into a digital recording signal and recorded onto a recording medium, and
a digital reproduction signal is reproduced from said recording medium, **characterized by** comprising:
a step of detecting whether an input signal is either one of said first and second television signals by using said identification signal and generating a detection signal;
a step of displaying that said input signal is said first television signal in response to said detection signal;
a step of selectively instructing whether said resolution reinforcement signal is recorded or not and generating a selection signal;
a step which is controlled on the basis of said detection signal and said selection signal and forms a digital recording signal;
a step of recording said detection signal and said selection signal together with said digital recording signal onto the recording medium;
a step of reproducing said recording medium and generating a digital reproduction signal;
a step of detecting whether said digital reproduction signal is a first reproduction signal of a format including the resolution reinforcement signal or a second reproduction signal of a format which does not include said resolution reinforcement signal from a control signal included in said digital reproduction signal and generating a detection signal;
a step of displaying that said digital reproduction signal is said first reproduction signal in response to said detection signal;
a step of selectively instructing whether said resolution reinforcement signal is added to an output signal or not and generating a selection signal; and
a step which is controlled on the basis of said detection signal and said selection signal and outputs, as a reproduction signal, one of the first television signal of a form including the resolution reinforcement signal and the identification signal which were inserted in a vertical blanking period and the second television signal of a format which does not include said resolution reinforcement signal and said identification signal.

7. An apparatus according to claim 1, 3, or 5, **characterized in that**
said first television signal is a signal which is transmitted in a letter box format and said resolution reinforcement signal is arranged for a predetermined line number of a non-picture portion of said letter box format.

8. An apparatus according to claim 1, 3, or 5, **characterized in that**
said first television signal has a format of 625 lines/50 Hz.

9. An apparatus according to claim 1, 3, or 5, **characterized in that**
said first television signal has a format of 525 lines/60 Hz.

10. A method according to claim 2, 4, or 6, **characterized in that**
said first television signal is a signal which is transmitted in a letter box format and said resolution reinforcement signal is arranged for a predetermined line number of a non-picture portion of said letter box format.

11. An apparatus according to claim 2, 4, or 6, **characterized in that**
said first television signal has a format of 625 lines/50 Hz.

12. A method according to claim 2, 4, or 6, **characterized in that**
the first television signal has a format of 525 lines/60 Hz.

## Patentansprüche

1. Aufzeichnungsgerät eines Fernsehsignals, bei dem ein erstes Fernsehsignal eines Formats, welches ein Auflösungsverstärkungssignal und ein Identifikationssignal aufweist, die in eine vertikale Austastperiode eingefügt wurden, oder ein zweites Fernsehsignal eines Formats, welches das Auflösungsverstärkungssignal und das Identifikationssignal nicht aufweist, in ein digitales Aufzeichnungssignal umgesetzt und auf einem Aufzeichnungsträger aufgezeichnet wird, **dadurch gekennzeichnet, dass** dieses aufweist:
eine Ermittlungseinrichtung zum Ermitteln, ob ein Eingangssignal entweder das erste oder das zweite Fernsehsignal ist, wobei das Identifikationssignal verwendet wird und ein Ermittlungssignal erzeugt wird;
eine Anzeigeeinrichtung zum Anzeigen, dass das Eingangssignal das erste Femsehsignal ist, als Antwort auf das Ermittlungssignal;
eine Instruktionseinrichtung zum selektiven Instruieren, ob das Auflösungsverstärkungssignal aufgezeichnet ist oder nicht, und zum Erzeugen eines Auswahlsignals;
eine Signalverarbeitungseinrichtung, welche auf der Basis des Ermittlungssignals und des Auswahlsignals gesteuert wird und ein digitales Aufzeichnungssignal bildet; und
eine Einrichtung zum Aufzeichnen des Ermittlungssignals und des Auswahlsignals zusammen mit dem digitalen Aufzeichnungssignal von der Signalverarbeitungseinrichtung auf dem Aufzeichnungsträger.

2. Aufzeichnungsverfahren eines Fernsehsignals, wodurch ein erstes Fernsehsignals eines Formats, welches ein Auflösungsverstärkungssignal und ein Identifikationssignal aufweist, die in eine vertikale Austastperiode eingefügt wurden, oder ein zweites Fernsehsignal eines Formats, welches das Auflösungsverstärkungssignal und das Identifikationssignal nicht aufweist, in ein digitales Aufzeichnungssignal umgesetzt und auf dem Aufzeichnungsträger aufgezeichnet wird, **dadurch gekennzeichnet, dass** dieses umfasst:
einen Schritt zum Ermitteln unter Verwendung des Identifikationssignals, ob ein Eingangssignal entweder das erste oder das zweite Femsehsignal ist, und zum Erzeugen eines Ermittlungssignals;
einen Schritt zum Anzeigen, dass das Eingangssignal das erste Fernsehsignal ist, als Antwort auf das Ermittlungssignal;
einen Schritt zum selektiven Instruieren, ob das Auflösungsverstärkungssignal aufgezeichnet ist oder nicht, und zum Erzeugen eines Auswahlsignals;
einen Schritt, der auf der Basis des Ermittlungssignals und des Auswahlsignals gesteuert wird und ein digitales Aufzeichnungssignal bildet; und
einen Schritt zum Aufzeichnen des Ermittlungssignals und des Auswahlsignals zusammen mit dem digitalen Aufzeichnungssignal auf dem Aufzeichnungsträger.

3. Wiedergabegerät eines Fernsehsignals zum Wiedergeben eines digitalen Wiedergabesignals von einem Aufzeichnungsträger, **dadurch gekennzeichnet, dass** dieses aufweist:
eine Einrichtung zum Wiedergaben des Aufzeichnungsträgers und zum Erzeugen des digitalen Wiedergabesignals;
eine Ermittlungseinrichtung zum Ermitteln, ob das digitale Wiedergabesignal das erste Wiedergabesignal eines Formats ist, welches ein Auflösungsverstärkungssignal aufweist, oder ein zweites Wiedergabesignal eines Formats, welches das Auflösungsverstärkungssignal von einem Steuersignal aufweist, welches im digitalen Wiedergabesignal enthalten ist, und zum Erzeugen eines Ermittlungssignals;
eine Anzeigeeinrichtung zum Anzeigen, dass das digitale Wiedergabesignal das erste Wiedergabesignal ist, als Antwort auf das Ermittlungssignal;
eine Instruktionseinrichtung zum selektiven Instruieren, ob das Auflösungsverstärkungssignal dem Ausgangssignal hinzugefügt ist oder nicht, und zum Erzeugen eines Auswahlsignals; und
eine Signalverarbeitungseinrichtung, welche auf der Basis des Ermittlungssignals und des Auswahlsignals gesteuert wird und als ein Wiedergabesignal ein erstes Fernsehsignal eines Formats, welches das Auflösungsverstärkungssignal und ein Identifikationssignal umfasst, die in eine vertikale Austastperiode eingefügt wurden, oder ein zweites Femsehsignal eines Formats, welches das Auflösungsverstärkungssignal und das Identifikationssignal nicht aufweist, ausgibt.

4. Wiedergabeverfahren eines Fernsehsignals zum Wiedergeben eines digitalen Wiedergabesignals von einem Aufzeichnungsträger, **dadurch gekennzeichnet, dass** dieses aufweist:
einen Schritt zum Wiedergaben des Aufzeichnungsträgers und zum Erzeugen des digitalen Wiedergabesignals;
einen Schritt zum Ermitteln, ob das digitale Wiedergabesignal ein erstes Wiedergabesignal eines Formats, welches ein Auflösungsverstärkungssignal aufweist, oder ein zweites Wiedergabesignal eines Formats ist, welches das Auflösungsverstärkungssignal nicht aufweist, von einem Steuersignal, welches im digitalen Wiedergabesignal enthalten ist, und zum Erzeugen eines Ermittlungssignals;
einen Schritt zum Anzeigen, dass das digitale Wiedergabesignal das erste Wiedergabesignal ist, als Antwort auf das Ermittlungssignal;
einen Schritt zum selektiven Instruieren, ob das Auflösungsverstärkungssignal dem Ausgangssignal hinzugefügt ist oder nicht, und zum Erzeugen eines Auswahlsignals; und
einen Schritt, der auf der Basis des Ermittlungssignals und des Auswahlsignals gesteuert wird und als ein Wiedergabesignal das erste Fernsehsignal eines Formats, welches das Auflösungsverstärkungssignal und das Identifikationssignal umfasst, die in eine vertikale Austastperiode eingefügt wurden, oder ein zweites Fernsehsignal eines Formats, welches nicht das Auflösungsverstärkungssignal und das Identifikationssignal aufweist, ausgibt.

5. Aufzeichnungs- und Wiedergabegerät eines Fernsehsignals, bei dem ein erstes Fernsehsignal eines Formats, welches ein Auflösungsverstärkungssignal und ein Identifikationssignal aufweist, die in eine vertikale Austastperiode eingefügt wurden, oder ein zweites Fernsehsignal eines Formats, welches das Auflösungsverstärkungssignal und das Identifikationssignal nicht aufweisen, in ein digitales Aufzeichnungssignal umgesetzt sind und auf einem Aufzeichnungsträger aufgezeichnet sind, und
ein digitales Wiedergabesignal vom Aufzeichnungsträger wiedergegeben wird, **gekennzeichnet dadurch, dass** dieses aufweist:
eine Ermittlungseinrichtung zum Ermitteln, ob ein Eingangssignal entweder das erste oder das zweite Fernsehsignal ist, wobei das Identifikationssignal verwendet wird, und zum Erzeugen eines Ermittlungssignals;
eine Anzeigeeinrichtung zum Anzeigen, dass das Eingangssignal das erste Fernsehsignal ist, als Antwort auf das Ermittlungssignal;
eine Instruktionseinrichtung zum selektiven Instruieren, ob das Auflösungsverstärkungssignal aufgezeichnet ist oder nicht, und zum Erzeugen eines Auswahlsignals;
eine Signalverarbeitungseinrichtung, welche auf der Basis des Ermittlungssignals und des Auswahlsignals gesteuert wird und ein digitales Aufzeichnungssignal bildet;
eine Einrichtung zum Aufzeichnen des Ermittlungssignals und des Auswahlsignals zusammen mit dem digitalen Aufzeichnungssignal von der Signalverarbeitungseinrichtung auf dem Aufzeichnungsträger;
eine Einrichtung zum Wiedergeben des Aufzeichnungsträgers und zum Erzeugen eines digitalen Wiedergabesignals;
eine Ermittlungseinrichtung zum Ermitteln, ob das digitale Wiedergabesignal ein erstes Wiedergabesignal eines Formats, welches das Auflösungsverstärkungssignal aufweist, oder ein zweites Wiedergabesignal eines Formats ist, welches das Auflösungsverstärkungssignal von einem Steuersignal nicht aufweist, welches im digitalen Wiedergabesignal enthalten ist, und zum Erzeugen eines Ermittlungssignals;
eine Anzeigeeinrichtung zum Anzeigen, dass das digitale Wiedergabesignal das erste Wiedergabesignal ist, als Antwort auf das Ermittlungssignal;
eine Instruktionseinrichtung zum selektiven Instruieren, ob das Auflösungsverstärkungssignal einem Ausgangssignal hinzugefügt wurde oder nicht, und zum Erzeugen eines Auswahlsignals; und
eine Signalverarbeitungseinrichtung, welche auf der Basis des Ermittlungssignals und des Ausgangssignals gesteuert wird und als Wiedergabesignal das erste Fernsehsignal eines Formats, welches das Auflösungsverstärkungssignal und das Identifikationssignal aufweist, welche in eine vertikale Austastperiode eingefügt wurden, oder das zweite Fernsehsignal eines Formats, welche das Auflösungsverstärkungssignal und das Identifikationssignal nicht aufweisen, ausgibt.

6. Aufzeichnungs- und Wiedergabeverfahren eines Femsehsignals, wobei ein erstes Fernsehsignal eines Formats, welches ein Auflösungsverstärkungssignal und ein Identifikationssignal aufweist, die in eine vertikale Austastperiode eingefügt wurden, oder ein zweites Femsehsignal eines Formats, welches das Auflösungsverstärkungssignal und das Identifikationssignal nicht aufweist, in ein digitales Aufzeichnungssignal umgesetzt wird und auf einem Aufzeichnungsträger aufgezeichnet wird, und
ein digitales Wiedergabesignal vom Aufzeichnungsträger wiedergegeben wird, **gekennzeichnet dadurch, dass** dieses aufweist:
einen Schritt zum Ermitteln, ob ein Eingangssignal entweder das erste oder das zweite Fernsehsignal ist, wobei das Identifikationssignal verwendet wird, und zum Erzeugen eines Ermittlungssignals;
einen Schritt zum Anzeigen, dass das Eingangssignal das erste Fernsehsignal ist, als Antwort auf das Ermittlungssignal;
einen Schritt zum selektiven Instruieren, ob das Auflösungsverstärkungssignal aufgezeichnet ist oder nicht, und zum Erzeugen eines Auswahlsignals;
einen Schritt, der auf der Basis des Ermittlungssignals und des Auswahlsignals gesteuert wird und ein digitales Aufzeichnungssignal bildet;
einen Schritt zum Aufzeichnen des Ermittlungssignals und des Auswahlsignals zusammen mit dem digitalen Aufzeichnungssignal auf dem Aufzeichnungsträger;
einen Schritt zum Wiedergeben des Aufzeichnungsträgers und zum Erzeugen eines digitalen Wiedergabesignals;
einen Schritt zum Ermitteln, ob das digitale Wiedergabesignal ein erstes Wiedergabesignal eines Formats, welches das Auflösungsstärkungssignal aufweist, oder ein zweites Wiedergabesignal eines Formats ist, welches das Auflösungsverstärkungssignal nicht aufweist, von einem Steuersignal, welches im digitalen Wiedergabesignal enthalten ist, und zum Erzeugen eines Ermittlungssignals;
einen Schritt zum Anzeigen, dass das digitale Wiedergabesignal das erste Wiedergabesignal ist, als Antwort auf das Ermittlungssignal;
einen Schritt zum selektiven Instruieren, ob das Auflösungsverstärkungssignal einem Ausgangssignal hinzugefügt ist oder nicht, und zum Erzeugen eines Auswahlsignals; und
einen Schritt, welcher auf der Basis des Ermittlungssignals und des Auswahlsignals gesteuert wird und als ein Wiedergabesignal das erste Fernsehsignal eines Formats, welches das Auflösungsverstärkungssignal und das Identifikationssignal aufweist, die in eine vertikale Austastperiode eingefügt wurden, oder das zweite Fernsehsignal eines Formats, welches das Auflösungsverstärkungssignal und das Identifikationssignal nicht aufweist, ausgibt.

7. Gerät nach Anspruch 1, 2 oder 5, **dadurch gekennzeichnet, dass**
das erste Fernsehsignal ein Signal ist, welches in einem Letterbox-Format übertragen wird, und das Auflösungsverstärkungssignal für eine vorher festgelegte Zeilennummer eines Nichtbildbereichs des Letterbox-Formats eingeteilt ist.

8. Gerät nach Anspruch 1, 3 oder 5, **dadurch gekennzeichnet, dass**
das erste Femsehsignal ein Format von 625 Zeilen und 50 Hz hat.

9. Gerät nach Anspruch 1, 3 oder 5, **dadurch gekennzeichnet, dass**
das erste Fernsehsignal ein Format von 525 Zeilen und 60 Hz hat.

10. Verfahren nach Anspruch 2, 4 oder 6, **dadurch gekennzeichnet, dass** das Fernsehsignal ein Signal ist, welches in einem Letterbox-Format übertragen wird und das Auflösungsverstärkungssignal für eine vorher festgelegte Zeilennummer eines Nichtbildbereichs des Letterboxformats eingeteilt ist.

11. Gerät nach Anspruch 2, 4 oder 6, **dadurch gekennzeichnet, dass**
das erste Femsehsignal ein Format von 625 Zeilen und 50 Hz hat.

12. Verfahren nach Anspruch 2, 4 oder 5, **dadurch gekennzeichnet, dass**
das erste Fernsehsignal ein Format von 525 Zeilen und 60 Hz hat.

## Revendications

1. Dispositif d'enregistrement d'un signal de télévision, dans lequel l'un d'un premier signal de télévision possédant un format incluant un signal d'accroissement de la résolution et un signal d'identification, qui ont été insérés dans une période de suppression verticale, et un second signal de télévision ayant un format qui inclut ledit signal d'accroissement de la résolution et ledit signal d'identification est converti en un signal d'enregistrement numérique et est enregistré sur un support d'enregistrement, **caractérisé en ce qu'**il comprend :
des moyens de détection pour détecter si un signal d'entrée est l'un desdits premier et second signaux de télévision en utilisant ledit signal d'identification et en générant un signal de détection;
des moyens d'affichage pour afficher le fait que ledit signal d'entrée est ledit premier signal de télévision en réponse audit signal de détection;
des moyens d'instruction pour sélectivement indiquer si ledit signal d'accroissement de la résolution est enregistré ou non et produire un signal de sélection;
des moyens de traitement de signaux, qui sont commandés sur la base dudit signal de détection et dudit signal de sélection et forment un signal d'enregistrement numérique; et
des moyens pour enregistrer ledit signal de détection et ledit signal de sélection conjointement avec le signal d'enregistrement numérique provenant desdits moyens de traitement de signaux sur le support d'enregistrement.

2. Procédé d'enregistrement d'un signal de télévision, selon lequel l'un d'un premier signal de télévision ayant un format incluant un signal d'accroissement de la résolution et un signal d'identification, qui ont été insérés dans une période de suppression verticale, et un second signal de télévision ayant un format qui n'inclut pas ledit signal d'accroissement de la résolution, et ledit signal d'identification est converti en un signal d'enregistrement numérique et est enregistré sur un support d'enregistrement, **caractérisé en ce qu'**il comprend :
une étape de détection du fait qu'un signal d'entrée est l'un desdits premier et second signaux de télévision moyennant l'utilisation dudit signal d'identification et la production d'un signal de détection;
une étape d'affichage du fait que ledit signal d'entrée est ledit premier signal de télévision en réponse audit signal de détection;
une étape d'instruction sélective déterminant si ledit signal d'accroissement de la résolution est enregistré ou non, et produisant un signal de sélection;
une étape, qui est commandée sur la base dudit signal de détection et dudit signal de sélection et forme un signal d'enregistrement numérique; et
une étape d'enregistrement dudit signal de détection et dudit signal de sélection conjointement avec ledit signal d'enregistrement numérique sur le support d'enregistrement.

3. Dispositif de reproduction d'un signal de télévision pour reproduire un signal de reproduction numérique à partir d'un support d'enregistrement, **caractérisé en ce qu'**il comprend :
des moyens pour reproduire le support d'enregistrement et générer le signal de reproduction numérique;
des moyens de détection pour détecter si ledit signal de reproduction numérique est un première signal de reproduction ayant un format incluant un signal d'accroissement de la résolution, ou un second signal de reproduction ayant un format qui n'inclut pas ledit signal d'accroissement de la résolution à partir d'un signal de commande inclus dans ledit signal de reproduction numérique, et pour produire un signal de détection;
des moyens d'affichage pour afficher le fait que ledit signal de reproduction numérique est ledit premier signal de reproduction en réponse audit signal de détection;
des moyens d'instruction pour déterminer sélectivement si ledit signal d'accroissement de résolution est ajouté ou non à un signal de sortie et générer un signal de sélection; et
des moyens de traitement de signaux, qui sont commandés sur la base dudit signal de détection et dudit signal de sélection et délivrent, en tant que signal de reproduction, l'un d'un premier signal de télévision ayant un format incluant le signal d'accroissement de la résolution, et d'un signal d'identification, qui ont été insérés dans une période de suppression verticale, et d'un second signal de télévision ayant un format qui n'inclut pas ledit signal d'accroissement de la résolution et ledit signal d'identification.

4. Procédé de reproduction d'un signal de télévision pour reproduire un signal de reproduction numérique à partir d'un support d'enregistrement, **caractérisé en ce qu'**il comprend :
une étape de reproduction du support d'enregistrement et de production du signal de reproduction numérique;
une étape de détection pour détecter si ledit signal de reproduction numérique est un premier signal de reproduction d'un format incluant un signal d'accroissement de la résolution ou un second signal de reproduction ayant un format qui n'inclut pas ledit signal d'accroissement de la résolution à partir d'un signal de commande contenu dans ledit signal de reproduction numérique, et générer un signal de détection;
une étape d'affichage du fait que ledit signal de reproduction numérique est ledit premier signal de reproduction en réponse audit signal de détection;
une étape d'instruction sélective déterminant si ledit signal d'accroissement de la résolution est ajouté ou non à un signal de sortie, et de production d'un signal de sélection; et
une étape, qui est commandée sur la base dudit signal de détection et dudit signal de sélection et délivre, en tant que signal de reproduction, l'un d'un premier signal de télévision ayant un format incluant le signal d'accroissement de la résolution et un signal d'identification, qui ont été insérés dans une période de suppression verticale, et d'un second signal de télévision ayant un format qui n'inclut pas ledit signal d'accroissement de la résolution et ledit signal d'identification.

5. Dispositif d'enregistrement et de reproduction d'un signal de télévision, dans lequel l'un d'un premier signal de télévision ayant un format incluant un signal d'accroissement de la résolution, et un signal d'identification, qui ont été insérés dans une période de suppression verticale, et d'un second signal de télévision ayant un format qui n'inclut pas ledit signal d'accroissement de la résolution, et dudit signal d'identification est converti en un signal d'enregistrement numérique et est enregistré sur un support d'enregistrement, et
un signal de reproduction numérique est reproduit à partir dudit support d'enregistrement,
**caractérisé en ce qu'**il comprend :
des moyens de détection pour détecter si un signal d'entrée est l'un desdits premier et second signaux de télévision moyennant l'utilisation dudit signal d'identification, et pour générer un signal de détection;
des moyens d'affichage pour afficher le fait que ledit signal d'entrée est ledit premier signal de sélection en réponse audit signal de détection;
des moyens d'instruction pour déterminer sélectivement si ledit signal d'accroissement de la résolution est enregistré ou non et produire un signal de sélection;
des moyens de traitement de signaux qui sont commandés sur la base dudit signal de détection et dudit signal de sélection et forment un signal d'enregistrement numérique;
des moyens pour enregistrer ledit signal de détection et ledit signal de sélection conjointement avec le signal d'enregistrement numérique à partir desdits moyens de traitement de signaux sur le support d'enregistrement;
des moyens pour reproduire ledit support d'enregistrement et générer un signal de reproduction numérique;
des moyens de détection pour détecter si ledit signal de reproduction numérique est un premier signal de reproduction d'un format incluant le signal d'accroissement de la résolution ou un second signal de reproduction ayant un format qui n'inclut pas ledit signal d'accroissement de la résolution à partir d'un signal de commande inclus par ledit signal de reproduction numérique, et pour générer un signal de détection;
des moyens d'affichage pour afficher le fait que ledit signal de reproduction numérique est ledit premier signal de reproduction en réponse audit signal de détection;
des moyens d'instruction pour détecter sélectivement si ledit signal d'accroissement de la résolution est ajouté ou non à un signal de sortie, et générer un signal de sélection;
des moyens de traitement de signaux, qui sont commandés sur la base dudit signal de détection et dudit signal de sélection et délivrent, en tant que signal de reproduction, l'un du premier signal de télévision ayant un format incluant le signal d'accroissement de la résolution et le signal d'identification, qui ont été insérés dans une période de suppression verticale, et du second signal de télévision ayant un format n'incluant pas ledit signal d'accroissement de la résolution et ledit signal d'identification.

6. Procédé d'enregistrement et de reproduction d'un signal de télévision, grâce auquel l'un d'un premier signal de télévision d'un format incluant un signal d'accroissement de résolution et un signal d'identification, qui ont été insérés dans une période de suppression verticale, et d'un second signal de télévision ayant un format qui n'inclut pas ledit signal d'accroissement de la résolution et ledit signal d'identification, est converti en un signal d'enregistrement numérique et est enregistré sur un support d'enregistrement, et
un signal de reproduction numérique est reproduit à partir dudit support d'enregistrement,
**caractérisé en ce qu'**il comprend :
une étape pour détecter si un signal d'entrée est soit l'un desdits premier et second signaux de télévision en utilisant ledit signal d'identification et générer un signal de détection;
une étape d'affichage du fait que ledit signal d'entrée est ledit premier signal de télévision en réponse audit signal de détection;
une étape d'instruction sélective déterminant si ledit signal d'accroissement de la résolution est enregistré ou non et générant un signal de sélection;
une étape, qui est commandée sur la base dudit signal de détection et dudit signal de sélection et forme un signal d'enregistrement numérique;
une étape d'enregistrement dudit signal de détection et dudit signal de sélection conjointement avec ledit signal d'enregistrement numérique sur le support d'enregistrement;
une étape de reproduction dudit support d'enregistrement et de production d'un signal de reproduction numérique;
une étape de détection pour détecter si ledit signal de reproduction numérique est un premier signal de reproduction ayant un format incluant le signal d'accroissement de la résolution ou un second signal de reproduction ayant un format qui n'inclut pas ledit signal d'accroissement de résolution à partir d'un signal de commande contenu dans ledit signal de reproduction numérique, et produire un signal de détection;
une étape d'affichage affichant le fait que ledit signal de reproduction numérique est ledit premier signal de reproduction en réponse audit signal de détection;
une étape d'instruction sélective déterminant si ledit signal d'accroissement de la résolution est ajouté ou non à un signal de sortie et générant un signal de sélection; et
une étape, qui est commandée sur la base dudit signal de détection et dudit signal de sélection et délivre, en tant que signal de reproduction, l'un du premier signal de télévision ayant un format incluant le signal d'accroissement de la résolution et le signal d'identification, qui ont été insérés dans une période de suppression verticale, et du second signal de télévision ayant un format qui n'inclut pas ledit signal d'accroissement de la résolution et ledit signal d'identification.

7. Dispositif selon la revendication 1, 3 ou 5, **caractérisé en ce que**
ledit premier signal de télévision est un signal qui est transmis dans un format de boîte aux lettres et ledit signal d'accroissement de la résolution est agencé pour un numéro prédéterminé de ligne d'une partie, ne contenant pas l'image, dudit format de boîte aux lettres.

8. Dispositif selon la revendication 1, 3 ou 5, **caractérisé en ce que**
ledit premier signal de télévision possède un format de 625 lignes/50 Hz.

9. Dispositif selon la revendication 1, 3 ou 5, **caractérisé en ce que**
ledit premier signal de télévision possède un format de 525 lignes/60 Hz.

10. Procédé selon la revendication 2, 4 ou 6, **caractérisé en ce que**
ledit premier signal de télévision est un signal qui est transmis dans un format de boîte aux lettres et que ledit signal d'accroissement de la résolution est agencé pour un numéro prédéterminé de ligne d'une partie, qui ne contient pas d'image, dudit format de boîte aux lettres.

11. Dispositif selon la revendication 2, 4 ou 6, **caractérisé en ce que**
ledit premier signal de télévision possède un format de 625 lignes/50 Hz.

12. Dispositif selon la revendication 2, 4 ou 6, **caractérisé en ce que**
ledit premier signal de télévision possède un format de 525 lignes/60 Hz.
